(19) Europäisches Patentamt
European Patent Office
Office européen des brevets

(11) **EP 4 329 361 A1**

(12) **EUROPEAN PATENT APPLICATION**
published in accordance with Art. 153(4) EPC

(43) Date of publication:
**28.02.2024 Bulletin 2024/09**

(21) Application number: **22824013.1**

(22) Date of filing: **24.05.2022**

(51) International Patent Classification (IPC):
**H04W 24/08** (2009.01)    **H04L 5/00** (2006.01)

(52) Cooperative Patent Classification (CPC):
**H04L 5/00; H04L 25/03; H04W 24/08**

(86) International application number:
**PCT/CN2022/094658**

(87) International publication number:
**WO 2022/262532 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2021 CN 202110681691
23.07.2021 CN 202110834994**

(71) Applicant: **Huawei Technologies Co., Ltd.
Shenzhen, Guangdong 518129 (CN)**

(72) Inventors:
• **YANG, Rui
Shenzhen, Guangdong 518129 (CN)**
• **QIN, Cheng
Shenzhen, Guangdong 518129 (CN)**
• **WANG, Sihai
Shenzhen, Guangdong 518129 (CN)**
• **LI, Xueru
Shenzhen, Guangdong 518129 (CN)**

(74) Representative: **Gill Jennings & Every LLP
The Broadgate Tower
20 Primrose Street
London EC2A 2ES (GB)**

(54) **SYMBOL TRANSMISSION METHOD AND COMMUNICATION APPARATUS**

(57)    This application provides a symbol transmission method and a communications apparatus. The method may include: A transmit-side device determines frequency-domain positions of reference signals that are used for phase noise estimation and that are on a plurality of resource blocks, where there are a plurality of reference signals on at least one resource block in the plurality of resource blocks, the reference signals occupy consecutive frequency-domain resources on the at least one resource block, for example, occupy a plurality of consecutive subcarriers; the transmit-side device maps, based on the frequency-domain positions of the reference signals on the plurality of resource blocks, the reference signals to one or more symbols, and sends, to a receive-side device, the one or more symbols to which the reference signals are mapped; and the receive-side device performs phase noise estimation based on the reference signals. According to this application, the reference signals can be distributed in a relatively centralized manner in frequency domain, so that accuracy of inter-carrier interference estimation and phase noise error compensation performance are improved, thereby improving demodulation performance of a receiver.

400

Determine frequency-domain positions of reference signals on a plurality of RBs, where the reference signals are used for phase noise estimation, the plurality of RBs include a first RB, a quantity of the reference signals on the first RB is W, the reference signals occupy consecutive frequency-domain resources on the first RB, and W is an integer greater than 1 — S401

Map, based on the frequency-domain positions of the reference signals on the plurality of RBs, the reference signals to one or more symbols, and send, to a communications device, the one or more symbols to which the reference signals are mapped — S402

FIG. 4

EP 4 329 361 A1

**Description**

This application claims priority to Chinese Patent Application No. 202110681691.6, filed with the China National Intellectual Property Administration on June 19, 2021 and entitled "PHASE NOISE COMPENSATION METHOD", and Chinese Patent Application No. 202110834994.7, filed with the China National Intellectual Property Administration on July 23, 2021 and entitled "SYMBOL TRANSMISSION METHOD AND COMMUNICATIONS APPARATUS", which are incorporated herein by reference in their entireties.

**TECHNICAL FIELD**

This application relates to the communications field, and more specifically, to a symbol transmission method and a communications apparatus.

**BACKGROUND**

In a communications process, due to some reasons such as current noise disturbance generated by a hardware system (for example, a crystal oscillator or a phase-locked loop) of a communications device, phase noise is generated for a wanted signal in a circuit node. With an increase of frequency bands, a power spectrum density of the phase noise increases, imposing greater impact on a received signal. In some cases, the phase noise is severer as the frequency band becomes higher, causing system performance deterioration.

According to the new radio (new radio, NR) protocol, a phase tracking reference signal (phase tracking reference signal, PTRS) is introduced to resolve a phase noise problem. Phase noise is estimated by using a PTRS, and algorithm compensation is performed on a digital baseband, to improve demodulation performance in a phase noise condition. Currently, in a PTRS configuration manner, impact of a common phase error (common phase error, CPE) is mainly considered, and accuracy of inter-carrier interference (inter-carrier interference, ICI) estimation is not considered.

**SUMMARY**

This application provides a symbol transmission method and a communications apparatus, to improve accuracy of ICI estimation.

According to a first aspect, a symbol transmission method is provided. The method may be performed by a transmit-side device (for example, a network device or a terminal device), or may be performed by a chip or a circuit configured in the transmit-side device, or may be implemented by a logical module or software that can implement all or some functions of the transmit-side device. This is not limited in this application.

The method may include: determining frequency-domain positions of reference signals on a plurality of resource blocks RBs, where the reference signals are used for phase noise estimation, the plurality of RBs include a first RB, a quantity of the reference signals on the first RB is W, the reference signals occupy consecutive frequency-domain resources on the first RB, and W is an integer greater than 1; and mapping, based on the frequency-domain positions of the reference signals on the plurality of RBs, the reference signals to one or more symbols, and sending, to a communications device, the one or more symbols to which the reference signals are mapped.

According to a second aspect, a symbol transmission method is provided. The method may be performed by a receive-side device (for example, a network device or a terminal device), or may be performed by a chip or a circuit configured in the receive-side device, or may be implemented by a logical module or software that can implement all or some functions of the receive-side device. This is not limited in this application.

The method may include: receiving one or more symbols; and performing phase noise estimation based on reference signals that are mapped to the one or more symbols, where frequency-domain positions of the reference signals on a plurality of resource blocks RBs include frequency-domain positions of the reference signals on a first RB, a quantity of the reference signals on the first RB is W, the reference signals occupy consecutive frequency-domain resources on the first RB, and W is an integer greater than 1.

In the foregoing technical solutions, a transmit-side device sends reference signals to a receive-side device. There are a plurality of reference signals on one resource block (for example, a first resource block), and the reference signals occupy consecutive frequency-domain resources on the resource block. After receiving the reference signals, the receive-side device performs phase noise estimation based on the reference signals; and further, may perform phase compensation based on a result of the phase noise estimation. Because the reference signals are distributed in a relatively centralized manner in frequency domain, for example, occupy consecutive frequency-domain resources on a resource block, when the receive-side device performs phase noise estimation based on the reference signals, accuracy of ICI estimation and phase noise error compensation performance can be improved, thereby improving demodulation performance of a receiver.

With reference to the first aspect or the second aspect, in some implementations, a manner of mapping the reference signals to the first RB is cyclic code mapping.

In the foregoing technical solutions, a manner of mapping the reference signals to a resource block is cyclic code mapping. In a process in which the receive-side device estimates ICI based on the reference signals, because of the cyclic code mapping, inverse computing may be simplified into Fourier transformation, to reduce computing complexity.

With reference to the first aspect or the second aspect, in some implementations, W is an odd number greater than 1.

In the foregoing technical solutions, a quantity of the reference signals on a resource block (for example, the first resource block) may be an odd number greater than 1. In this way, the reference signals can be distributed in a relatively centralized manner in frequency domain, and also comply with related protocol specifications, so that a change to a protocol is slight.

With reference to the first aspect or the second aspect, in some implementations, the frequency-domain positions of the W reference signals on the first RB are determined based on a position of a center of the W reference signals on the first RB and W.

In the foregoing technical solutions, frequency-domain positions of the reference signals on a resource block (for example, the first resource block) may be determined based on a quantity of and a central position of the reference signals on the resource block, where the central position indicates a frequency-domain position of a center of the plurality of reference signals on the resource block.

With reference to the first aspect or the second aspect, in some implementations, the frequency-domain positions of the reference signals on the plurality of RBs are determined based on a frequency-domain density of the reference signals on the plurality of RBs and/or a quantity of frequency-domain resources occupied by the reference signals on each RB.

The frequency-domain density of the reference signals on the plurality of RBs, for example, may indicate an RB density of the reference signals mapped to the plurality of RBs, or may be used to indicate an RB spacing of the reference signals mapped to the plurality of RBs.

The quantity of frequency-domain resources occupied by the reference signals on each RB, for example, may be used to indicate a quantity of subcarriers occupied by reference signals on one RB, or may be used to indicate a quantity of subcarriers occupied by reference signals that are mapped to one RB. For example, the quantity of frequency-domain resources occupied by the reference signals on each RB may be the same, or may be different, or may be partially the same and partially different.

In the foregoing technical solutions, the frequency-domain positions of the reference signals on the plurality of resource blocks may be determined based on a frequency-domain density of the reference signals on the plurality of RBs and/or a quantity of frequency-domain resources occupied by the reference signals on each RB.

With reference to the first aspect or the second aspect, in some implementations, the frequency-domain density of the reference signals on the plurality of RBs or the quantity of frequency-domain resources occupied by the reference signals on each RB is associated with one or more of the following information: a quantity of the reference signals on the plurality of RBs, a modulation scheme, a quantity of the plurality of RBs, and a frequency band in which the plurality of RBs are located.

For example, there may be an association relationship (or referred to as a correspondence) between the frequency-domain density of the reference signals on the plurality of RBs and one or more of: the quantity of the reference signals on the plurality of RBs, the modulation scheme, the quantity of the plurality of RBs, and the frequency band in which the plurality of RBs are located.

For another example, there may be an association relationship (or referred to as a correspondence) between the quantity of frequency-domain resources occupied by the reference signals on each RB and one or more of: the quantity of the reference signals on the plurality of RBs, the modulation scheme, the quantity of the plurality of RBs, and the frequency band in which the plurality of RBs are located.

In the foregoing technical solutions, the frequency-domain density of the reference signals on the plurality of RBs or the quantity of frequency-domain resources occupied by the reference signals on each RB may have an association relationship with one or more of: the quantity of the reference signals on the plurality of RBs, the modulation scheme, the quantity of the plurality of RBs, and the frequency band in which the plurality of RBs are located. In this way, the frequency-domain density of the reference signals on the plurality of RBs or the quantity of frequency-domain resources occupied by the reference signals on each RB may be obtained and learned by using one or more of: the quantity of the reference signals on the plurality of RBs, the modulation scheme, the quantity of the plurality of RBs, and the frequency band in which the plurality of RBs are located, thereby reducing signaling overheads caused by notifying the frequency-domain density of the reference signals on the plurality of RBs or the quantity of frequency-domain resources occupied by the reference signals on each RB.

With reference to the first aspect or the second aspect, in some implementations, the reference signals are distributed on some or all RBs in the plurality of RBs, and there is a same spacing between every two adjacent RBs in the some or all RBs.

In the foregoing technical solutions, when the reference signals are mapped to the plurality of resource blocks, there is a same spacing between any two adjacent resource blocks in the plurality of resource blocks, so that the reference signals are distributed relatively evenly on frequency-domain resources, thereby improving phase noise estimation performance.

With reference to the first aspect or the second aspect, in some implementations, the plurality of RBs include a second RB and a third RB, the second RB and the third RB are RBs adjacent to a direct current DC subcarrier, and frequency-domain positions of the reference signals on the second RB and the third RB are symmetrically distributed by centering on the DC subcarrier.

In the foregoing technical solutions, frequency-domain positions of the reference signals on RBs near a direct current (direct current, DC) subcarrier are symmetrically distributed by centering on the DC subcarrier, so that impact of the DC subcarrier on the PTRSs may be reduced, thereby improving demodulation performance at a receive end.

With reference to the first aspect or the second aspect, in some implementations, the symbol is a symbol using single-carrier modulation, or the symbol is a symbol using multi-carrier modulation.

With reference to the first aspect or the second aspect, in some implementations, the reference signal is a signal with a non-constant modulus.

In the foregoing technical solutions, a non-constant-modulus design is performed on the reference signals, so that the receive-side device can better perform non-linear estimation based on received reference signals with non-constant moduli.

With reference to the first aspect or the second aspect, in some implementations, the reference signal is a phase tracking reference signal PTRS.

According to a third aspect, a communications apparatus is provided. The communications apparatus is configured to perform the method provided in the first aspect or the second aspect. Specifically, the apparatus may include units and/or modules configured to perform the method provided in the first aspect or any one of the foregoing implementations of the first aspect or in the second aspect or any one of the foregoing implementations of the second aspect, for example, a processing unit and/or a communications unit.

In an implementation, the apparatus is a communications device (for example, a terminal device or a network device). When the apparatus is a communications device, the communications unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit configured in a communications device. When the apparatus is a chip, a chip system, or a circuit configured in a communications device, the communications unit may be: an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communications apparatus is provided. The apparatus includes: at least one processor, configured to execute a computer program or instructions stored in a memory, so as to perform the method provided in the first aspect or any one of the foregoing implementations of the first aspect, or the method provided in the second aspect or any one of the foregoing implementations of the second aspect. Optionally, the communications apparatus further includes a memory, configured to store the program or the instructions.

In an implementation, the apparatus is a communications device.

In another implementation, the apparatus is a chip, a chip system, or a circuit configured in a communications device.

According to a fifth aspect, this application provides a processor, configured to perform the methods provided in the foregoing aspects.

For operations related to the processor such as sending and obtaining/receiving, unless otherwise specified or if the operations do not conflict with actual functions or internal logic of the processor in related descriptions, the operations may be understood as operations performed by the processor such as outputting and receiving or inputting, or may be understood as sending and receiving operations performed by a radio frequency circuit and an antenna. This is not limited in this application.

According to a sixth aspect, a computer-readable storage medium is provided. The computer-readable storage medium stores program code for execution by a device, and the program code includes the method provided in the first aspect or any one of the foregoing implementations of the first aspect or in the second aspect or any one of the foregoing implementations of the second aspect.

According to a seventh aspect, a computer program product, including instructions, is provided. When the computer program product runs on a computer, the computer is enabled to perform the method provided in the first aspect or any one of the foregoing implementations of the first aspect or in the second aspect or any one of the foregoing implementations of the second aspect.

According to an eighth aspect, a chip is provided. The chip includes a processor and a communications interface. The processor reads, by using the communications interface, instructions stored in a memory, to perform the method provided in the first aspect or any one of the foregoing implementations of the first aspect or in the second aspect or any one of the foregoing implementations of the second aspect.

Optionally, in an implementation, the chip further includes a memory, where the memory stores a computer program or instructions, and the processor is configured to execute the computer program or the instructions stored in the memory; and when the computer program or the instructions are executed, the processor is configured to perform the method provided in the first aspect or any one of the foregoing implementations of the first aspect or in the second aspect or any one of the foregoing implementations of the second aspect.

According to a ninth aspect, a communications system is provided, including the foregoing transmit-side device and the foregoing receive-side device.

## BRIEF DESCRIPTION OF DRAWINGS

FIG. 1 is a schematic diagram of a wireless communications system to which an embodiment of this application is applicable;

FIG. 2 is a schematic flowchart of signal processing at a receive end;

FIG. 3 is a schematic diagram of a PTRS pattern provided in an existing manner;

FIG. 4 is a schematic diagram of a symbol transmission method 400 according to an embodiment of this application;

FIG. 5 is a schematic diagram of a PTRS pattern according to an embodiment of this application;

FIG. 6 is another schematic diagram of a PTRS pattern according to an embodiment of this application;

FIG. 7 is a schematic diagram of PTRS patterns according to another embodiment of this application;

FIG. 8 is another schematic diagram of PTRS patterns according to another embodiment of this application;

FIG. 9 is a schematic diagram of PTRS mapping based on cyclic codes;

FIG. 10 is a schematic block diagram of a symbol transmission apparatus 1000 according to an embodiment of this application;

FIG. 11 is a schematic block diagram of another symbol transmission apparatus 1100 according to an embodiment of this application; and

FIG. 12 is a schematic diagram of a chip system 1200 according to an embodiment of this application.

## DESCRIPTION OF EMBODIMENTS

The following describes the technical solutions of this application with reference to the accompanying drawings.

The technical solutions in embodiments of this application may be applied to various communications systems, for example, a fifth-generation (5th generation, 5G) system or a new radio (new radio, NR) system, a satellite communications system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communications system, for example, a sixth-generation mobile communications system. In addition, the technical solutions in embodiments of this application may be applied to a device-to-device (device to device, D2D) communications system, a vehicle-to-everything (vehicle-to-everything, V2X) communications system, a machine-to-machine (machine to machine, M2M) communications system, a machine type communication (machine type communication, MTC) system, an internet of things (internet of things, IoT) communications system, or another communications system.

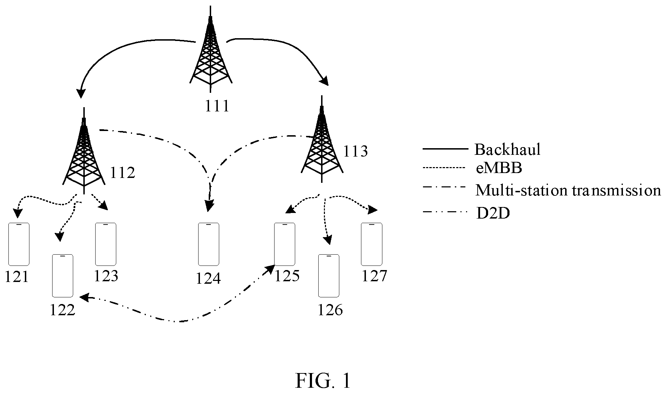

For ease of understanding embodiments of this application, a communications system to which embodiments of this application are applicable is described first with reference to FIG. 1.

In an example, FIG. 1 shows a schematic diagram of a wireless communications system to which an embodiment of this application is applicable. As shown in FIG. 1, the wireless communications system may include at least one network device, for example, a network device 111, a network device 112, and a network device 113 shown in FIG. 1. The wireless communications system may further include at least one terminal device, for example, a terminal device 121, a terminal device 122, a terminal device 123, a terminal device 124, a terminal device 125, a terminal device 126, and a terminal device 127 shown in FIG. 1.

This application may be used in a scenario of communications between a network device and a terminal device, for example, multi-station transmission shown in FIG. 1, where, for example, the network device 112 may communicate with the terminal device 121, the terminal device 122, and the terminal device 123; or for example, enhanced mobile broadband (enhanced mobile broadband, eMBB) transmission shown in FIG. 1, where, for example, the network device 112 and the network device 113 may communicate with the terminal device 124.

This application may also be used in a scenario of communications between a network device and another network device, for example, backhaul shown in FIG. 1, where, for example, the network device 111 may communicate with the network device 112 and the network device 113.

This application may also be used in a scenario of communications between a terminal device and another terminal device, for example, D2D transmission shown in FIG. 1, where, for example, the terminal device 122 may communicate with the terminal device 125.

It should be understood that, the terminal device in the wireless communications system may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a device that provides voice/data connectivity to a user, for example, a handheld device or vehicle-mounted device having a wireless connection function. Currently, examples of some terminal devices are: a mobile phone (mobile phone), a tablet computer, a laptop computer, a pocket PC, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communications function, a computing device or another processing device connected to a wireless modem, a wearable device, a terminal device in a 5G network, a terminal device in a future evolved public land mobile network (public land mobile network, PLMN), or the like. This is not limited in this application. In internet of vehicles communications, a communications terminal carried on a vehicle is a terminal device, and a road side unit (road side unit, RSU) may also serve as a terminal device. A communications terminal carried on an unmanned aerial vehicle may also be considered as a terminal device.

In addition, in embodiments of this application, the terminal device may be alternatively a wearable device. The wearable device may also be referred to as a wearable intelligent device, and is a general term of a wearable device that is intelligently designed and developed for daily wear by using a wearable technology, for example, glasses, gloves, a watch, clothing, or shoes. The wearable device is a portable device that can be directly worn by a user or integrated into clothes or an accessory of a user. The wearable device is not only a hardware device, but also implements a powerful function through software support, data exchange, and cloud interaction. Wearable smart devices in a broad sense include full-featured and large-size devices that can implement complete or partial functions without depending on smartphones, for example, smart watches or smart glasses; and devices that focus only on a type of application function and need to work with other devices such as smartphones, for example, various smart bands or smart jewelry for monitoring physical symptoms.

In addition, in embodiments of this application, the terminal device may be alternatively a terminal device in an internet of things (internet of things, IoT) system. IoT is an important part of future development of information technologies. A main technical feature of IoT is connecting things to a network by using a communications technology, to implement an intelligent network for human-machine interconnection and thing-thing interconnection.

It should be understood that, the network device in the wireless communications system may be a device that can communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example: a NodeB (NodeB), an evolved NodeB (evolved NodeB, eNB), a next-generation NodeB (next-generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof; or the base station may be a communications module, a modem, or a chip that is disposed in the foregoing device or apparatus. In addition, the base station may be a mobile switching center; a device that bears a base station function in D2D, V2X, and M2M communications; a network-side device in a 6G network; a device that bears a base station function in a future communications system; or the like. The base station may support networks with a same access technology or different access technologies. A specific technology and a specific device form that are used by the network device are not limited in embodiments of this application.

The base station may be fixed, or may be mobile. For example, a helicopter or an unmanned aerial vehicle may be configured as a mobile base station, and one or more cells may move based on a position of the mobile base station. In another example, a helicopter or an unmanned aerial vehicle may be configured as a device for communicating with another base station.

In some deployments, the network device in embodiments of this application may be a CU or a DU, or the network device includes a CU and a DU. The gNB may further include an active antenna unit (AAU).

The network device and the terminal device may be deployed on land, including an indoor device, an outdoor device, a handheld device, or a vehicle-mounted device; or may be deployed on a water surface; or may be deployed on an airplane, a balloon, or a satellite in the air. Scenarios in which the network device and the terminal device are located are not limited in embodiments of this application.

It should be understood that FIG. 1 is merely an example for description, and this application is not limited thereto. Embodiments of this application are applicable to any communication scenario in which a transmit-side device communicates with a receive-side device.

It should be further understood that the communications device (for example, the transmit-side device or the receive-side device) in this application may be a network device, or may be a terminal device. For example, the transmit-side device mentioned in embodiments of this application may be a terminal device, and the receive-side device may be a network device. For another example, the transmit-side device mentioned in embodiments of this application may be a network device, and the receive-side device may be a terminal device. For still another example, both the transmit-side device and the receive-side device mentioned in embodiments of this application may be terminal devices. For yet another example, both the transmit-side device and the receive-side device mentioned in embodiments of this application may be network devices.

For ease of understanding embodiments of this application, terms involved in this application are briefly described as follows.

1. Symbol

A symbol, also referred to as an emitted symbol, may be a symbol having an uplink waveform and/or a symbol having a downlink waveform in a communications system.

In an example, a symbol may be a symbol using multicarrier modulation, for example, the symbol is an orthogonal frequency division multiplexing (orthogonal frequency division multiplexing, OFDM) symbol.

In another example, a symbol may be a symbol using single-carrier modulation. For example, the symbol is a cyclic prefix orthogonal frequency division multiplexing (cyclic prefix orthogonal frequency division multiplexing, CP-OFDM) symbol, or the symbol is a discrete Fourier transformation-spread-orthogonal frequency division multiplexing (discrete Fourier transformation-spread-orthogonal frequency division multiplexing, DFT-s-OFDM) symbol, or the symbol is a single carrier-quadrature amplitude modulation (single carrier-quadrature amplitude modulation, SC-QAM) symbol.

The foregoing is merely an example for description, and this application is not limited thereto. The following description is provided by mainly using OFDM symbols as an example.

2. Phase tracking reference signal (phase tracking reference signal, PTRS)

According to the NR protocol, a PTRS may be used to resolve a phase noise problem. Specifically, phase noise may be estimated based on a PTRS at a receive end, and algorithm compensation is performed on a digital baseband, to improve demodulation performance in a phase noise condition.

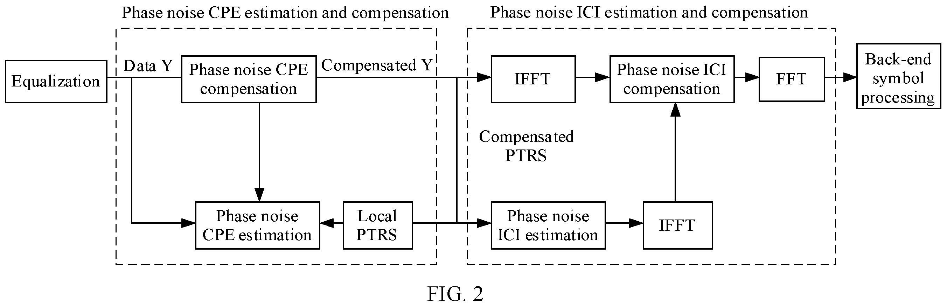

For example, FIG. 2 shows a schematic flowchart of signal processing at a receive end.

Refer to FIG. 2. After the signal is received at the receive end, in an example, a processing process at the receive end may include: equalization processing, phase noise CPE estimation and compensation, phase noise ICI estimation and compensation, and back-end symbol-level processing.

The equalization processing represents frequency-domain channel estimation and equalization. A channel multipath effect may be reduced or eliminated through the processing.

The phase noise common phase error (common phase error, CPE) estimation and compensation represents estimating a CPE and performing phase compensation based on the estimated CPE. The phase noise CPE estimation and compensation, for example, may include: estimating the CPE based on a PTRS, and then performing, based on the estimated CPE, phase compensation on data.

The phase noise inter-carrier interference (inter-carrier interference, ICI) estimation and compensation represents estimating ICI, and performing phase compensation based on the estimated ICI. The phase noise ICI estimation and compensation, for example, may include: estimating the ICI based on a PTRS, and then performing phase com-

EP 4 329 361 A1

pensation based on the estimated ICI.

The back-end symbol-level processing represents processing a symbol after the phase noise estimation and compensation is performed. The back-end symbol-level processing, for example, may include: demodulation and decoding, block error rate (block error rate, BLER) computing, and the like.

It should be understood that the foregoing is merely an example for description, and the specific processing process at the receive end is not limited in this application.

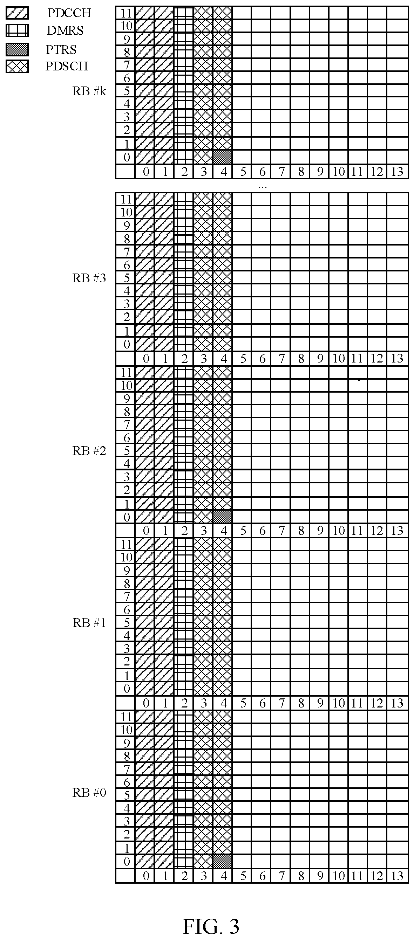

Generally, PTRS configuration needs to be considered from two dimensions: time domain and frequency domain. Currently, a PTRS pattern (pattern) is: at a spacing of $L_{PT-RS} \in \{1,2,4\}$ OFDM symbols in terms of time-domain resources, and at a spacing of $K_{PT-RS} \in \{2,4\}$ resource blocks (resource block, RB) in terms of frequency-domain resources. For example, FIG. 3 is a schematic diagram of a PTRS pattern provided in an existing manner. As shown in FIG. 3, in the existing manner, a spacing between two adjacent RBs is 2, that is, one PTRS may be mapped every other RB. In other words, one PTRS is mapped to an RB #0, an RB #2, an RB #4, an RB #6, ..., and an RB #k each. In this application, the RB spacing mentioned a plurality of times may represent a difference between IDs of two RBs, for example, a spacing between an RB #k1 and an RB #k2 may be a difference between k1 and k2, where k1 represents an ID of the RB #k1, and k2 represents an ID of the RB #k2. Such details are not described again in the following description.

It can be learned that, according to the foregoing configuration, the PTRSs are relatively sparse or relatively discrete in frequency domain. Because the PTRSs are relatively sparse or relatively discrete in frequency domain, ICI may not be accurately estimated, based on the PTRSs, at the receive end.

Therefore, embodiments of this application provide a solution, to improve ICI estimation accuracy and improve phase noise error compensation performance.

It can be understood that, the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes terms involved in this application, and such details are not described again in the following embodiments. The following describes embodiments provided in this application in detail with reference to the accompanying drawings. The embodiments provided in this application are applicable to the communications system shown in FIG. 1, and are not limited thereto.

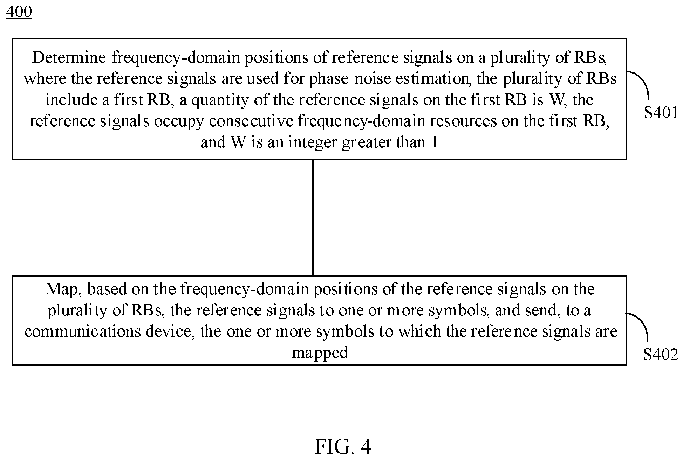

FIG. 4 is a schematic diagram of a symbol transmission method 400 according to an embodiment of this application. The method 400 may include the following steps.

S401: Determine frequency-domain positions of reference signals on a plurality of RBs, where the reference signals are used for phase noise estimation, the plurality of RBs include a first RB, a quantity of the reference signals on the first RB is W, the reference signals occupy consecutive frequency-domain resources on the first RB, and W is an integer greater than 1.

The reference signal is a reference signal that can be used for phase noise estimation. For example, the reference signal is a PTRS. It should be understood that any reference signal that can be used for phase noise estimation is applicable to this application.

The determining frequency-domain positions of reference signals on a plurality of RBs may also be understood as determining frequency-domain positions of the reference signals on a plurality of frequency-domain units (or referred to as frequency-domain units). In this embodiment of this application, description is made mainly by using an example in which one frequency-domain unit is one RB. This is not limited herein. For example, one frequency-domain unit may be alternatively one resource element (resource element, RE), or one resource block group (resource block group, RBG), or one predefined sub-band (sub-band), or one precoding resource block group (precoding resource block group, PRG), or one bandwidth part (bandwidth part, BWP), or one carrier, or one serving cell.

In this embodiment of this application, there may be a plurality of reference signals on one RB. In other words, a plurality of reference signals may be mapped to (or distributed on, or located on) one RB. For example, a quantity of reference signals on one RB may be an odd number, for example, may be an odd number greater than 1.

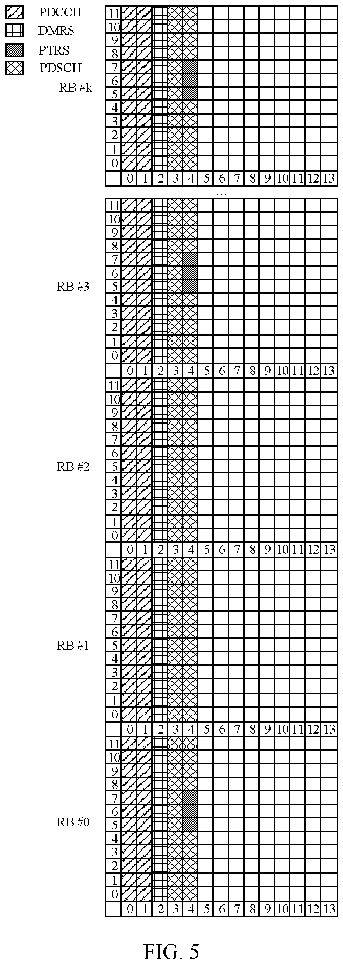

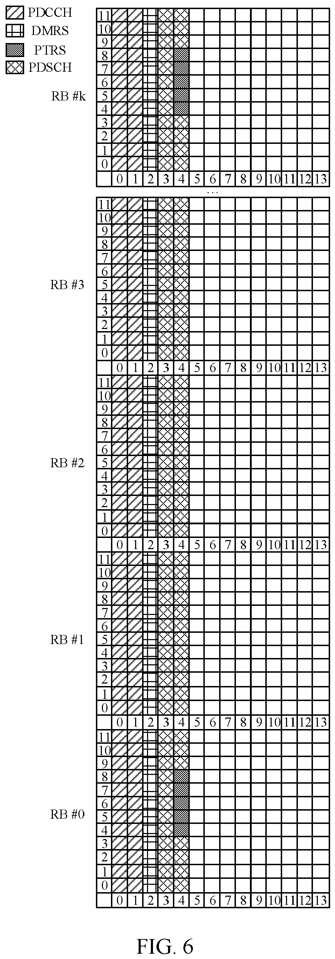

An example in which the reference signal is a PTRS is used. For example, FIG. 5 and FIG. 6 each show a schematic diagram of a PTRS pattern according to an embodiment of this application.

As shown in FIG. 5, a quantity of PTRSs on one RB (for example, an RB #0, an RB #3, or an RB #k) is 3 (in other words, three PTRSs may be mapped to one RB); and the three PTRSs occupy consecutive frequency-domain resources on the RB, for example, occupy subcarriers 5, 6, and 7 on each of the RB #0, the RB #3, and the RB #k. As shown in FIG. 6, a quantity of PTRSs on one RB (for example, an RB #0 or an RB #k) is 5 (in other words, five PTRSs may be mapped to one RB); and the five PTRSs occupy consecutive frequency-domain resources on the RB, for example, occupy subcarriers 4, 5, 6, 7, and 8 on each of the RB #0 and the RB #k.

Specific manners of determining the frequency-domain positions of the reference signals on the plurality of RBs are described subsequently in detail with reference to content of Aspect 1.

S402: Map, based on the frequency-domain positions of the reference signals on the plurality of RBs, the reference signals to one or more symbols, and send, to a communications device, the one or more symbols to which the reference signals are mapped.

Correspondingly, the communications device (namely, a receive-side device) receives the one or more symbols. The receive-side device may perform phase noise estimation based on the reference signals that are mapped to the one or more symbols, and may further perform compensation based on a result of the phase noise estimation.

In this embodiment of this application, there are a plurality of reference signals on one RB, the reference signals occupy consecutive frequency-domain resources on the RB, and the reference signals are distributed in a relatively centralized manner in frequency domain. Therefore, when the receive-side device performs phase noise estimation based on the reference signals, accuracy of ICI estimation and phase noise error compensation performance can be improved, thereby improving demodulation performance of a receiver.

In an example, mapping (or referred to as distribution) of the reference signals in frequency domain provided in this embodiment of this application may also be referred to as cluster mapping (or referred to as cluster distribution), and is not limited.

The following describes this application from two aspects. Solutions in the two aspects may be used independently or may be used in combination with each other. This is not limited.

Aspect 1: frequency-domain positions of the reference signals on the plurality of RBs

The plurality of RBs, for example, may represent frequency-domain resources used for scheduling on a network side, or may represent available resource blocks used for scheduling on the network side. The reference signals may be mapped to the plurality of RBs; or the reference signals may be mapped to some RBs in the plurality of RBs. In other words, the reference signals may not be mapped to some RBs in the plurality of RBs.

For example, the reference signal is a PTRS. The frequency-domain positions of the PTRSs on the plurality of RBs may be determined in one or more of the following manners.

Manner 1: Determine, based on a position of a center of a plurality of PTRSs on one RB and a quantity of the plurality of PTRSs, frequency-domain positions of the PTRSs on the RB.

The position of the center of the plurality of PTRSs on one RB, which may also be referred to as a central position, represents a central position of the plurality of PTRSs mapped to (or distributed on, or located on) the RB. Optionally, the position of the center of the plurality of PTRSs on one RB may be predefined, or may be configured on the network side, or may be preset inside a transmit-side device and inside the receive-side device. This is not limited. For example, the position of the center of the plurality of PTRSs on one RB may be a central position of the RB.

For ease of description, $K_{offset}$ is used below to indicate the position of the center of the plurality of PTRSs on one RB.

For example, one RB includes 12 subcarriers, and $K_{offset}$ = 0, 1, 2, ..., or 11, where 0, 1, 2, ..., or 11 represents an index (index, ID) of a subcarrier, or is referred to as an identifier (identifier, ID).

For example, a quantity of PTRSs mapped to one RB is T (that is, a quantity of PTRSs on one RB is T); and when T is greater than 1, the T PTRSs mapped to the RB occupy consecutive frequency-domain resources, and $K_{offset}$ indicates a position at which a center of the T PTRSs mapped to the RB is located on the RB. If the T PTRSs mapped to the RB occupy a plurality of consecutive subcarriers, $K_{offset}$ represents a central subcarrier in the plurality of subcarriers.

In Manner 1, specific positions of the T PTRSs on the RB may be determined based on $K_{offset}$ and T. For example, for the T PTRSs on the RB: the T PTRSs are distributed by centering on $K_{offset}$. For example, T may be an odd number.

In an example, as shown in FIG. 5, it is assumed that PTRSs are mapped to an RB #0, an RB #3, and an RB #k, $Ko_{ffset}$ = 6, and T = 3. In other words, three PTRSs are distributed on the RB by centering on a subcarrier 6. As shown in FIG. 5, frequency-domain positions of the PTRSs on the RB #0, the RB #3, and the RB #k are: a subcarrier 5, the subcarrier 6, and a subcarrier 7. In other words, the PTRSs are mapped to the subcarrier 5, the subcarrier 6, and the subcarrier 7 on each of the RB #0, the RB #3, and the RB #k.

In another example, as shown in FIG. 6, it is assumed that PTRSs are mapped to an RB #0 and an RB #k, $Ko_{ffset}$ = 6, and T = 5. In other words, five PTRSs are distributed on the RB by centering on a subcarrier 6. As shown in FIG. 6, frequency-domain positions of the PTRSs on the RB #0 and the RB #k are: a subcarrier 4, a subcarrier 5, the subcarrier 6, a subcarrier 7, and a subcarrier 8. In other words, the PTRSs are mapped to the subcarrier 4, the subcarrier 5, the subcarrier 6, the subcarrier 7, and the subcarrier 8 on each of the RB #0 and the RB #k.

It may be understood that FIG. 5 and FIG. 6 are merely examples for description, and this application is not limited thereto. For example, $K_{offset}$ of the PTRSs mapped to each RB may be alternatively different.

It may be further understood that Manner 1 is merely an example for description, and is not limited thereto. Any variation of Manner 1 shall fall within the protection scope of this application. For example, the specific positions of the T PTRSs on one RB may be determined based on IDs of subcarriers. For example, the specific positions of the T PTRSs on one RB may be: T consecutive subcarriers starting from a subcarrier with a smallest ID, for example, a subcarrier 0 to a subcarrier T-1 on the RB. For another example, the specific positions of the T PTRSs on one RB may be: T consecutive subcarriers starting from a subcarrier with a largest ID, for example, a subcarrier 11 to a subcarrier 11-T+1 on the RB. For still another example, the specific positions of the T PTRSs on one RB may be: T consecutive subcarriers starting from a subcarrier with a specific ID.

Manner 2: Determine, based on a frequency-domain density of PTRSs on a plurality of RBs and/or a quantity of frequency-domain resources occupied by the PTRSs on each RB, frequency-domain positions of the PTRSs on the plurality of RBs.

(1) Frequency-domain density of the PTRSs on the plurality of RBs

The frequency-domain density of the PTRSs on the plurality of RBs, for example, may be referred to as a frequency-domain density for short, or may be referred to as a cluster spacing; and may be used to indicate a density of the RBs to which the PTRSs are mapped in frequency domain, or may be used to indicate a spacing between the RBs to which the PTRSs are mapped.

For ease of description, $K_{density}$ is used below to represent the frequency-domain density of the PTRSs on the plurality of RBs, where $K_{density}$ is an integer greater than or equal to 1.

For example, assuming that PTRSs are mapped to an RB #k1 and an RB #k2, and no PTRS is mapped to an RB between the RB #k1 and the RB #k2, $K_{density}$ may be a difference between k1 and k2. In a possible manner, PTRSs are mapped to some or all RBs in the plurality of RBs, and there is a same spacing between every two adjacent RBs in the some or all RBs, that is, each spacing is $K_{density}$.

In Manner 2, the frequency-domain positions of the PTRSs on the plurality of RBs may be determined based on $K_{density}$.

In an example, as shown in FIG. 5, $K_{density}$ = 3, that is, a spacing between the RBs to which the PTRSs are mapped is 3. In a possible manner, PTRS mapping may be performed every two RBs based on RB IDs (for example, starting from an RB with a smallest ID (for example, an RB#0), starging from an RB with a largest ID, or starting from an RB with a specific ID). As shown in FIG. 5, the frequency-domain positions of the PTRSs on the plurality of RBs are: the RB #0, an RB #3, ..., and an RB #k. In other words, the PTRSs are mapped to the RB #0, the RB #3, ..., and the RB #k, and no PTRS may be mapped to the other RBs. Frequency-domain positions of the PTRSs on each RB may be determined, for example, based on Manner 1.

In another example, as shown in FIG. 6, $K_{density}$ = 5, that is, a spacing between the RBs to which the PTRSs are mapped is 5. In a possible manner, PTRS mapping may be performed every four RBs based on RB IDs (for example, from an RB with a smallest ID (for example, an RB#0), an RB with a largest ID, or an RB with a specific ID). As shown in FIG. 6, the frequency-domain positions of the PTRSs on the plurality of RBs are: the RB #0, ..., and an RB #k (for example, k is 5). In other words, PTRSs are mapped to the RB #0, ..., and the RB #k, and no PTRS may be mapped to the other RBs. Frequency-domain positions of the PTRSs on each RB may be determined, for example, based on Manner 1.

FIG. 3 and FIG. 5 are used as an example. In FIG. 3, one PTRS is mapped every other RB, that is, a total quantity of PTRSs mapped to the RB #0 to an RB #2 is 2. In FIG. 5, $K_{density}$ = 3, that is, a total quantity of PTRSs mapped to the RB #0 to the RB #2 is 3. In other words, in FIG. 3 and FIG. 5, overheads of the PTRSs on the RB #0 to an RB #2 are almost the same. However, according to the PTRS patterns provided in embodiments of this application, because the PTRSs are distributed more densely, demodulation performance is better. In some cases, for example, the PTRSs provided in embodiments of this application may be implemented by designing the frequency-domain density and/or a frequency domain size. Compared with a PTRS distribution similar to that in FIG. 3, the PTRSs can be more densely distributed and PTRS overheads can be reduced.

The frequency-domain density may be predefined, or may be configured on the network side, or may be preset inside a transmit-side device and inside the receive-side device. This is not limited. The following describes three possible designs.

Design manner 1: the frequency-domain density may be associated with (or referred to as being correlated with, or referred to as corresponding to) a total quantity of the mapped PTRSs.

The total quantity of the mapped PTRSs indicates a total quantity of the PTRSs on the plurality of RBs. For example, the frequency-domain density and the total quantity of the mapped PTRSs meet a relationship shown in Table 1.

In a transmission process, a corresponding frequency-domain density may be determined based on the total quantity of the mapped PTRSs. Table 1 is used as an example. If the total quantity of the mapped PTRSs is N #1, the frequency-domain density is $K_{density}$ #1, that is, a spacing between two adjacent RBs to which the PTRSs are mapped is $K_{density}$ #1; or if the total quantity of the mapped PTRSs is N #5, the frequency-domain density is $K_{density}$ #5, that is, the spacing between two adjacent RBs to which the PTRSs are mapped is $K_{density}$ #5.

**Table 1**

| Total quantity of the mapped PTRSs | Frequency-domain density |
|---|---|
| N #1 | $K_{density}$ #1 |

(continued)

| Total quantity of the mapped PTRSs | Frequency-domain density |
|---|---|
| N #2 | $K_{density}$ #2 |
| N #3 | $K_{density}$ #3 |
| N #4 | $K_{density}$ #4 |
| N #5 | $K_{density}$ #5 |

Design manner 2: the frequency-domain density may be associated with a frequency-domain resource.

In an example, the frequency-domain density is associated with a schedulable bandwidth, where the schedulable bandwidth represents an available bandwidth used for scheduling on the network side, for example, a quantity of RBs used for scheduling on the network side. For example, the frequency-domain density and the schedulable bandwidth may meet a relationship shown in Table 2.

**Table 2**

| Schedulable bandwidth | Frequency-domain density |
|---|---|
| $N_{RB0} \leq N_{RB} < N_{RB1}$ | $K_{density}$ #1' |
| $N_{RB1} \leq N_{RB} < N_{RB2}$ | $K_{density}$ #2' |
| $N_{RB2} \leq N_{RB} < N_{RB3}$ | $K_{density}$ #3' |
| $N_{RB3} \leq N_{RB} < N_{RB4}$ | $K_{density}$ #4' |
| $N_{RB4} \leq N_{RB}$ | $K_{density}$ #5' |

In a transmission process, a corresponding frequency-domain density may be determined based on the schedulable bandwidth. Table 2 is used as an example. If a schedulable bandwidth $N_{RB}$ configured on the network side meets a condition $N_{RB2} \leq N_{RB} < N_{RB3}$, the frequency-domain density is $K_{density}$ #3', that is, a spacing between two adjacent RBs to which the PTRSs are mapped is $K_{density}$ #3'; or if the schedulable bandwidth $N_{RB}$ configured on the network side meets a condition $N_{RB3} \leq N_{RB} < N_{RB4}$, the frequency-domain density is $K_{density}$ #4', that is, the spacing between two adjacent RBs to which the PTRSs are mapped is $K_{density}$ #4'.

In another example, the frequency-domain density is associated with a frequency band (frequency band), where the frequency band represents a frequency band in which RBs used for scheduling on the network side are located. For example, the frequency-domain density and the frequency band may meet a relationship shown in Table 3.

**Table 3**

| Frequency band | Frequency-domain density |
|---|---|
| Band n258 | $K_{density}$ #1" |
| Band n257 | $K_{density}$ #3" |
| Band n259 | $K_{density}$ #3" |

In a transmission process, a corresponding frequency-domain density may be determined based on the frequency band. Table 3 is used as an example. If a frequency band configured on the network side is Band n258, the frequency-domain density is $K_{density}$ #1".

Design manner 3: the frequency-domain density may be associated with a modulation scheme.

The modulation scheme may include pi/2-binary phase shift keying (binary phase shift keying, BPSK), quadrature phase shift keying (quadrature phase shift keying, QPSK), 16 quadrature amplitude modulation (quadrature amplitude modulation, QAM), 64QAM, 256QAM, phase shift keying (phase shift keying, PSK), amplitude phase shift keying (amplitude phase shift keying, APSK), non-uniform QAM, and the like.

For example, the frequency-domain density and the modulation scheme may meet a relationship shown in Table 4.

**Table 4**

| Modulation scheme | Frequency-domain density |
|---|---|
| QPSK | $K_{density}$ #1''' |
| 16QAM | $K_{density}$ #2''' |
| 64QAM | $K_{density}$ #3''' |
| 256QAM | $K_{density}$ #4''' |

In a transmission process, a corresponding frequency-domain density may be determined based on the modulation scheme. Table 4 is used as an example. If the modulation scheme is 16QAM, the frequency-domain density is $K_{density}$ #2''', that is, a spacing between two adjacent RBs to which the PTRSs are mapped is $K_{density}$ #2'''.

It should be understood that Table 1 to Table 4 are merely examples for description, and this application is not limited thereto.

It should be further understood that the foregoing description is provided by using an example in which the frequency-domain density is a density of RBs to which the PTRSs are mapped in frequency domain. This application is not limited thereto. For example, the frequency-domain density may be further used to indicate a density of subcarriers to which the PTRSs are mapped in frequency domain, or may be used to indicate a spacing between the subcarriers to which the PTRSs are mapped.

The foregoing describes the frequency-domain density of the PTRSs on the plurality of RBs with reference to (1), and the following describes the quantity of frequency-domain resources occupied by the PTRSs on each RB.

(2) Quantity of frequency-domain resources occupied by the PTRSs on each RB

The quantity of frequency-domain resources occupied by the PTRSs on each RB, for example, may be referred to as a frequency-domain size for short, or may be referred to as a cluster size or an order; and may be used to indicate a quantity of subcarriers occupied by the PTRSs on one RB, or may be used to indicate a quantity of subcarriers occupied by the PTRSs mapped to one RB.

For ease of description, $K_{number}$ is used below to indicate the quantity of frequency-domain resources occupied by the PTRSs on each RB, where $K_{number}$ is an integer greater than or equal to 1. In an example, $K_{number}$ is an odd number greater than 1.

In Manner 2, the frequency-domain positions of the PTRSs on the plurality of RBs may be determined based on $K_{number}$.

In an example, as shown in FIG. 5, $K_{number}$ = 3, that is, the quantity of subcarriers occupied by the PTRSs on one RB is 3. In a possible manner, frequency-domain positions of the PTRSs on each RB may be determined with reference to Manner 1. As shown in FIG. 5, an RB #0 is used as an example. It may be determined, based on $K_{number}$ = 3, that the quantity of subcarriers occupied by the PTRSs on one RB is 3; and it may be determined, based on $K_{offset}$ = 6, that a position of a center of the three PTRSs on the RB is a subcarrier 6. In this case, it may be determined that frequency-domain positions of the PTRSs on the RB #0 are: a subcarrier 5, the subcarrier 6, and a subcarrier 7. In another possible manner, the frequency-domain positions of the PTRSs on each RB may be determined based on subcarrier IDs. The RB #0 is used as an example. It may be determined, based on $K_{number}$ = 3, that the quantity of subcarriers occupied by the PTRSs on one RB is 3. If starting from a subcarrier with a smallest ID, it may be determined that frequency-domain positions of the PTRSs on the RB #0 are: a subcarrier 0, a subcarrier 1, and a subcarrier 2. If starting from a subcarrier with a largest ID, it may be determined that frequency-domain positions of the PTRSs on the RB #0 are: a subcarrier 11, a subcarrier 10, and a subcarrier 9.

In another example, as shown in FIG. 6, $K_{number}$ = 5, that is, the quantity of subcarriers occupied by the PTRSs on one RB is 5. In a possible manner, frequency-domain positions of the PTRSs on each RB may be determined with reference to Manner 1. As shown in FIG. 6, an RB #0 is used as an example. It may be determined, based on $K_{number}$ = 5, that the quantity of subcarriers occupied by the PTRSs on one RB is 5; and it may be determined, based on $K_{offset}$ = 6, that a position of a center of the five PTRSs on the RB is a subcarrier 6. In this case, it may be determined that frequency-domain positions of the PTRSs on the RB #0 are: a subcarrier 4, a subcarrier 5, the subcarrier 6, a subcarrier 7, and a subcarrier 8. In another possible manner, the frequency-domain positions of the PTRSs on each RB may be determined based on subcarrier IDs. The RB #0 is used as an example. It may be determined, based on $K_{number}$ = 5, that the quantity of subcarriers occupied by the PTRSs on one RB is 5. If starting from a subcarrier with a smallest ID, it may be determined that frequency-domain positions of the PTRSs on the RB #0 are: a subcarrier 0, a subcarrier 1, a subcarrier 2, a subcarrier 3, and the subcarrier 4. If starting from a subcarrier with a largest ID, it may be determined that frequency-domain positions of the PTRSs on the RB #0 are: a subcarrier 11, a subcarrier 10, a subcarrier 9, the subcarrier 8, and the subcarrier 7.

It should be understood that the foregoing descriptions are merely examples, and this application is not limited thereto.

The frequency domain size may be predefined, or may be configured on the network side, or may be preset inside a transmit-side device and inside the receive-side device. This is not limited. The following describes three possible designs.

Design manner 1: the frequency-domain size may be associated with (or referred to as being correlated with, or referred to as corresponding to) a total quantity of the mapped PTRSs.

For example, the frequency domain size and the total quantity of the mapped PTRSs meet a relationship shown in Table 5.

**Table 5**

| Total quantity of the mapped PTRSs | Frequency domain size |
|---|---|
| N #1' | $K_{number}$ #1 |
| N #2' | $K_{number}$ #2 |
| N #3' | $K_{number}$ #3 |
| N #4' | $K_{number}$ #4 |
| N #5' | $K_{number}$ #5 |

In a transmission process, a corresponding frequency domain size may be determined based on the total quantity of the mapped PTRSs. Table 5 is used as an example. If the total quantity of the mapped PTRSs is N#1', the frequency domain size is $K_{number}$ #1, that is, the quantity of subcarriers occupied by the PTRSs on one RB is $K_{number}$ #1. If the total quantity of the mapped PTRSs is N#5', the frequency domain size is $K_{number}$ #5, that is, the quantity of subcarriers occupied by the PTRSs on one RB is $K_{number}$ #5.

Design manner 2: the frequency domain size may be associated with a frequency-domain resource.

In an example, the frequency domain size is correlated with a schedulable bandwidth, where the schedulable bandwidth represents an available bandwidth for scheduling on the network side, for example, a quantity of RBs used for scheduling on the network side. For example, the frequency domain size and the schedulable bandwidth may meet a relationship shown in Table 6.

**Table 6**

| Schedulable bandwidth | Frequency domain size |
|---|---|
| $N_{RB0}' \leq N_{RB} < N_{RB1}'$ | $K_{number}$ #1' |
| $N_{RB1}' \leq N_{RB} < N_{RB2}'$ | $K_{number}$ #2' |
| $N_{RB2}' \leq N_{RB} < N_{RB3}'$ | $K_{number}$ #3' |
| $N_{RB3}' \leq N_{RB} < N_{RB4}'$ | $K_{number}$ #4' |
| $N_{RB4}' \leq N_{RB}$ | $K_{number}$ #5' |

In a transmission process, a corresponding frequency domain size may be determined based on the schedulable bandwidth. Table 6 is used as an example. If a schedulable bandwidth NRB configured on the network side meets a condition $N_{RB2}' \leq N_{RB} < N_{RB3}'$, the frequency domain size is $K_{number}$ #3', that is, the quantity of subcarriers occupied by the PTRSs on one RB is $K_{number}$ #3'. If the schedulable bandwidth NRB configured on the network side meets a condition $NRB3' \leq N_{RB} < NRB4'$. In this case, the frequency domain size is $K_{number}$ #4', that is, the quantity of subcarriers occupied by the PTRSs on one RB is $K_{number}$ #4'.

In another example, the frequency domain size is associated with a frequency band, where the frequency band represents a frequency band in which RBs used for scheduling on the network side are located. For example, the frequency domain size and the frequency band may meet a relationship shown in Table 7.

**Table 7**

| Frequency band | Frequency domain size |
|---|---|
| Band n258 | $K_{number}$ #1" |
| Band n257 | $K_{number}$ #2" |
| Band n259 | $K_{number}$ #3" |

In a transmission process, a corresponding frequency domain size may be determined based on the frequency band. Table 7 is used as an example. If a frequency band configured on the network side is Band n258, the frequency domain size is $K_{number}$ #1‴ (for example, $K_{number}$ #1" = 1), that is, the quantity of subcarriers occupied by the PTRSs on one RB is $K_{number}$ #1". If the frequency band configured on the network side is Band n257, the frequency domain size is $K_{number}$ #2" (for example, $K_{number}$ #2" = 3), that is, the quantity of subcarriers occupied by the PTRSs on one RB is $K_{number}$ #2". If the frequency band configured on the network side is Band n259, the frequency domain size is $K_{number}$ #3" (for example, $K_{number}$ #3" = 5), that is, the quantity of subcarriers occupied by the PTRSs on one RB is $K_{number}$ #3".

Design manner 3: the frequency domain size may be associated with a modulation scheme.

For example, the frequency domain size and the modulation scheme may meet a relationship shown in Table 8.

**Table 8**

| Modulation scheme | Frequency domain size |
|---|---|
| QPSK | $K_{number}$ #1‴ |
| 16QAM | $K_{number}$ #2‴ |
| 64QAM | $K_{number}$ #3‴ |
| 256QAM | $K_{number}$ #4‴ |

In a transmission process, a corresponding frequency domain size may be determined based on the modulation scheme. Table 8 is used as an example. If the modulation scheme is 16QAM, the frequency domain size is $K_{number}$ #2‴ , that is, the quantity of subcarriers occupied by the PTRSs on one RB is $K_{number}$ #2‴.

It should be understood that Table 5 to Table 8 are merely examples for description, and this application is not limited thereto.

It should be further understood that the foregoing description is provided by using an example in which the frequency domain size is the quantity of subcarriers occupied by the PTRSs mapped to one RB. This application is not limited thereto.

It should be further understood that the foregoing description is provided by mainly using an example in which the PTRSs occupy a same quantity of frequency-domain resources on each RB. This application is not limited thereto. For example, the PTRSs may occupy different quantities of frequency-domain resources on each RB. For another example, the PTRSs occupy a same quantity of frequency-domain resources on some RBs, and the PTRSs occupy different quantities of frequency-domain resources on the other RBs.

It should be further understood that the foregoing separately describes the manners of determining the frequency-domain positions of the PTRSs on the plurality of RBs based on the frequency-domain density or the frequency domain size. This is not limited herein. For example, the frequency-domain positions of the PTRSs on the plurality of RBs may be determined by combining the frequency-domain density and the frequency domain size. For example, it is determined, based on the frequency-domain density, that the PTRSs are on some RBs in the plurality of RBs; and a quantity of subcarriers occupied by the PTRSs on the some RBs is determined based on the frequency domain size.

Manner 3: frequency-domain positions of PTRSs on RBs (for example, denoted as a second RB and a third RB) near a direct current (direct current, DC) subcarrier are symmetrically distributed by centering on the DC subcarrier.

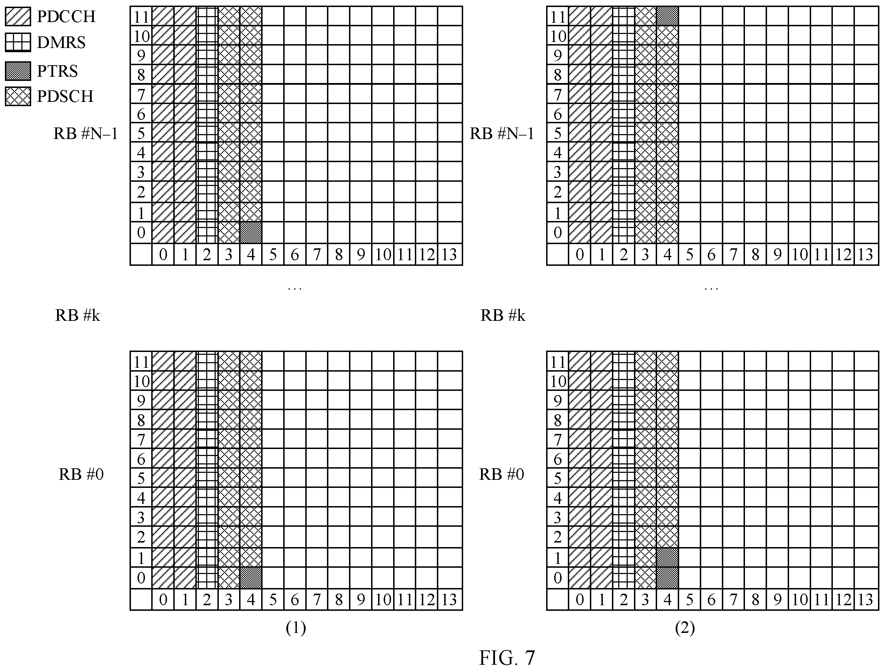

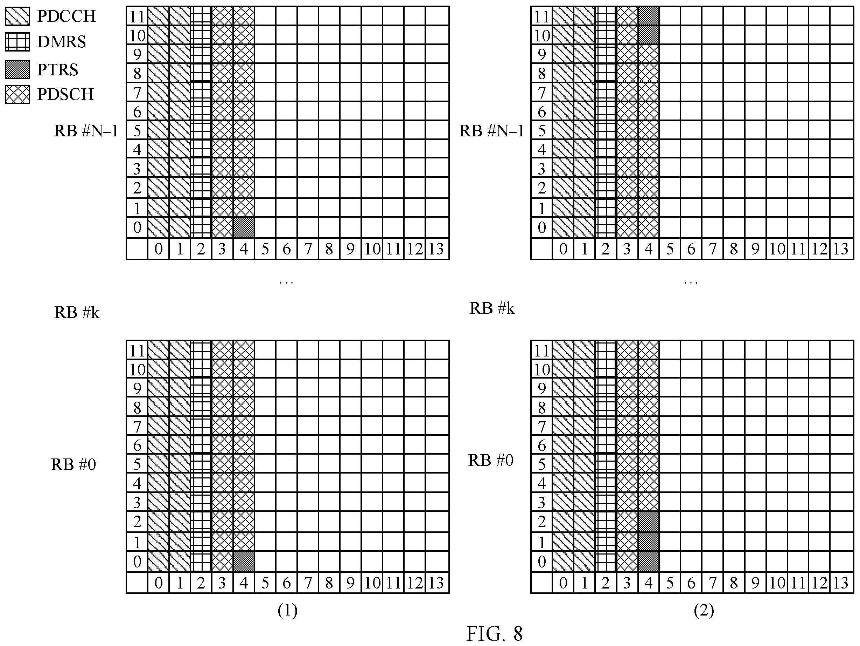

In a possible design, PTRSs mapped near a DC subcarrier may be distributed on (or referred to as being mapped to) RBs symmetrically at high and low ends by centering on the DC subcarrier. In an example, FIG. 7 and FIG. 8 each show a schematic diagram of PTRS patterns according to an embodiment of this application. As shown in (2) in FIG. 7 or (2) in FIG. 8, it is assumed that RBs to which PTRSs are mapped near a DC subcarrier are an RB #0 and an RB #N-1, and then the PTRSs mapped to the RB #0 and the RB #N-1 may be distributed on and mapped to the RBs symmetrically at high and low ends by centering on the DC subcarrier. For example, for an RB (for example, an RB #k, where k = 1, 2, ..., or N-2) between the RB #0 and the RB #N-1, frequency-domain positions of PTRSs on the RB #k may be determined in the foregoing Manner 1 and/or Manner 2; or frequency-domain positions of PTRSs on the RB #k may be determined in a manner similar to that in FIG. 3; or frequency-domain positions of PTRSs on the RB #k may be determined based on the frequency-domain positions of the PTRSs on the RB #0 and/or the frequency-domain positions of the PTRSs on the RB #N-1. This is not limited. The determining, based on the frequency-domain positions of the PTRSs on the RB #0 and/or the frequency-domain positions of the PTRSs on the RB #N-1, frequency-domain position of PTRSs on the RB #k may be understood as: determining, based on a distribution of the positions of the PTRSs on the RB #0 and/or a distribution of the positions of the PTRSs on the RB #N-1, a distribution of positions of PTRSs on another RB (that is, the RB #k). For example, $K_{number}$ of the PTRSs on the RB #k is determined based on $K_{number}$ of the PTRSs on the RB #0 and/or $K_{number}$ of the PTRSs on the RB #N-1. For another example, positions of subcarriers occupied by the PTRSs on the RB #k are determined based on positions of subcarriers occupied by the PTRSs on the RB #0 and/or positions of subcarriers occupied by the PTRSs on the RB #N-1. This is not limited.

For example, as shown in (2) in FIG. 7, PTRSs are mapped to subcarriers with relatively small IDs on the RB #0, that is, a subcarrier 0 and a subcarrier 1; and a PTRS is mapped to a subcarrier with a relatively large ID on the RB #N-1, that is, a subcarrier 11. Compared with a PTRS pattern shown in (1) in FIG. 7, a PTRS pattern shown in (2) in FIG. 7 can reduce impact of a DC carrier on the PTRSs, and can improve demodulation performance at the receive end.

For another example, as shown in (2) in FIG. 8, PTRSs are mapped to subcarriers with relatively small IDs on the RB #0, that is, a subcarrier 0, a subcarrier 1, and a subcarrier 2; and PTRSs are mapped to subcarriers with relatively large IDs on the RB #N-1, that is, a subcarrier 11 and a subcarrier 10. Compared with a PTRS pattern shown in (1) in FIG. 8, a PTRS pattern shown in (2) in FIG. 8 can reduce impact of a DC carrier on the PTRSs, and can improve demodulation performance at the receive end.

It should be understood that the foregoing are merely examples for description, and this application is not limited thereto. For example, as shown in (2) in FIG. 7, alternatively, a PTRS may be mapped to the subcarrier 0 on the RB #0; and PTRSs are mapped to a subcarrier 10 and the subcarrier 11 on the RB #N-1. For another example, as shown in (2) in FIG. 8, alternatively, PTRSs may be mapped to the subcarrier 0 and the subcarrier 1 on the RB #0; and PTRSs are mapped to a subcarrier 9, the subcarrier 10, and the subcarrier 11 on the RB #N-1. It should be further understood that the foregoing Manner 1 to Manner 3 may be used separately, or may be used in combination. This is not limited. For example, a combination of Manner 1 and Manner 2 is used as an example. In a possible manner, frequency-domain positions of PTRSs on an RB may be determined based on $Ko_{offset}$ in Manner 1 and the frequency domain size in Manner 2. For example, it is determined, based on the frequency domain size in Manner 2, that a quantity of subcarriers occupied by PTRSs on an RB is $K_{number}$; and it is determined, based on $Ko_{offset}$ in Manner 1, that a central position of the $K_{number}$ subcarriers is $K_{offset}$. In this way, frequency-domain positions of the PTRSs on the RB can be determined.

It should be further understood that the foregoing Manner 1 to Manner 3 are examples for description, and this application is not limited thereto. Any variation of the foregoing manners is applicable to this application. For example, the frequency-domain positions of the PTRSs on the plurality of RBs may be determined based on a total quantity of the PTRSs on the plurality of RBs. For another example, the frequency-domain positions of the PTRSs on the plurality of RBs may be determined based on the position of the center of the plurality of PTRSs on one RB and the frequency-domain density and/or the frequency domain size.

The foregoing describes the frequency-domain positions of the reference signals on the plurality of RBs with reference to Aspect 1. The following describes mapping of the reference signals to the plurality of RBs with reference to Aspect 2. It should be understood that solutions provided in Aspect 2 may be used in combination with the foregoing embodiments, or may be used independently. This is not limited.

Aspect 2: mapping of the reference signals to the plurality of RBs

The reference signal (for example, a PTRS) is generally generated based on a pseudo-noise (pseudo-noise, PN) sequence or a pseudo-random code. The PN sequence may be generated by using any one of the following sequences: an m sequence, a Gold sequence, a quadratic residue sequence, a twin-prime sequence, a ZC sequence, a Frank sequence, a Golomb sequence, a Chirp sequence, a P4 sequence, or the like. This is not limited. After obtaining a sequence of the reference signal, in a possible manner, the transmit-side device maps the sequence of the reference signal to one or more subcarriers, to generate the reference signal, and sends the reference signal to the receive-side device.

Optionally, a manner of mapping the reference signal (for example, a PTRS) to an RB is cyclic code mapping. For example, after obtaining a sequence of the reference signal, the transmit-side device may map, based on cyclic codes, the sequence of the reference signal to one or more subcarriers, to generate the reference signal, and send the reference signal to the receive-side device.

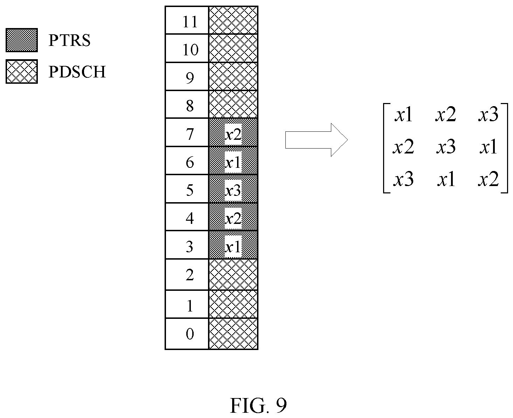

For example, the reference signal is a PTRS. FIG. 9 is a schematic diagram of PTRS mapping based on cyclic codes.

Refer to FIG. 9. After a PTRS sequence is obtained, for example, the obtained PTRS sequence includes "x1, x2, x3, x4, x5", mapping is performed based on cyclic codes. In an example, a sequence of PTRSs mapped to subcarriers

$$\begin{bmatrix} x1 & x2 & x3 \\ x2 & x3 & x1 \\ x3 & x1 & x2 \end{bmatrix}$$

3 to 7 is "$x1$, $x2$, $x3$, $x1$, $x2$". In this mapping manner, a circulant matrix is obtained. For a manner of obtaining the circulant matrix, refer to an existing manner. This is not limited. For example, in a possible manner, the first row "$x1$, $x2$, $x3$" of the circulant matrix may be obtained by: using $x1$ on the subcarrier 6 as a first column of the first row, using $x2$ on the subcarrier 7 as a second column of the first row, and using $x3$ on the subcarrier 5 as a third column of the first row; the second row "$x2$, $x3$, $x1$" of the circulant matrix may be obtained by: using $x2$ on the subcarrier 4 as a first column of the second row, using $x3$ on the subcarrier 5 as a second column of the second row, and using $x1$ on the subcarrier 3 as a third column of the second row; and the third row "$x3$, $x1$, $x2$" of the circulant matrix may be obtained by: using $x3$ on the subcarrier 5 as a first column of the third row, using $x1$ on the subcarrier 6 is used as a second column of the third row, and using $x2$ on the subcarrier 4 as a third column of the third row.

A superscript H represents conjugate transposition. For example, $A^H$ represents conjugate transposition of a matrix (or vector) $A$.

Using the cyclic code mapping manner can reduce complexity of computing at the receive end. The following provides a detailed description.

A phase noise transmission model of an OFDM symbol may meet Formula 1 as follows:

$$y(t) = e^{j\varphi(t)} \int_{-\infty}^{\infty} h(\tau) x(t-\tau) + n(t)$$

Formula 1

where y(t) is a received signal, x(t) is a sent signal, $h(\tau)$ indicates a channel impulse response, $e^{j\varphi(t)}$ is time-domain phase noise, and n(t) is Gaussian white noise.

After fast Fourier transform (fast Fourier transform, FFT) processing is performed, the received signal may meet Formula 2 as follows:

$$Y(k) = \Phi \otimes \left( H(k) X(k) \right) + N(k)$$

Formula 2

where $Y(k)$ is a signal received on a $k^{th}$ carrier, $X(k)$ is a signal sent on the $k^{th}$ carrier, $N(k)$ is Gaussian white noise on the $k^{th}$ carrier, $\Phi$ is fast Fourier transform of the time-domain phase noise, and $\Phi = FFT(e^{j\varphi(n)})$.

It is assumed that a channel is a non-frequency selective fading channel, and H(k) is a constant. Then the received signal may meet Formula 3 as follows:

$$Y = C(X)\Phi + N$$

Formula 3

C(X) is a circulant matrix formed by rows of X, and may meet Formula 4 as follows:

$$C(X) = \begin{bmatrix} X[0] & X[1] & \cdots & X[N-1] \\ X[1] & X[2] & & X[0] \\ \vdots & & \ddots & \vdots \\ X[N-1] & X[0] & \cdots & X[N-2] \end{bmatrix}, \quad \Phi = \begin{bmatrix} \Phi[0] \\ \Phi[1] \\ \vdots \\ \Phi[N-1] \end{bmatrix}$$

Formula 4

where Formula 4 may be understood as an ICI leakage weight of a neighboring carrier to a current carrier, $\Phi[0]$ represents

CPE, $\Phi[1]$ to $\Phi[N-1]$ represent ICI, and N is an ICI order (used to measure a leakage degree of a neighboring frequency band).

If K carriers (K = 1, 2, ..., k, ..., or N-1) are received, the received signal meets Formula 5 as follows:

$$Y_{K\times 1} = C_{K\times N}\Phi_{N\times 1} + N_{K\times 1}$$

Formula 5

Signals received on the k$^{th}$ carrier and a (k+1)$^{th}$ carrier are as follows:

$$\begin{bmatrix} \vdots \\ Y[k] \\ Y[k+1] \\ \vdots \end{bmatrix} = \begin{bmatrix} & & \cdots & \\ X[k] & X[k+1] & & X[k-1] \\ X[k+1] & X[k+2] & \ddots & X[k] \\ & & \cdots & \end{bmatrix} * \begin{bmatrix} \Phi[0] \\ \Phi[1] \\ \vdots \\ \Phi[N-1] \end{bmatrix}$$

Then ICI estimated by the receive-side device meets Formula 6 as follows:

$$\Phi_{N\times 1} = \left( C_{K\times N}^{H} C_{K\times N} \right)^{-1} C_{K\times N} Y_{K\times 1}$$

Formula 6

C is a circulant matrix. The circulant matrix is diagonalized, and the diagonalized circulant matrix may meet Formula 7 as follows:

$$C = C(x) = F \times diag(\tilde{x}) \times F^{H}$$

Formula 7

where F is a DFT transformation matrix, $\tilde{x}$ is Fourier transformation of $x$, and the diag() function is used to construct a diagonal matrix.

For $C^{H}C = F \times diag(\tilde{x} \square \tilde{x}^{*}) \times F^{H}$, $(C^{H}C)^{-1} = F \times (diag(\tilde{x} \square \tilde{x}^{*}))^{-1} \times F^{H}$, where $\odot$ represents point multiplication, and the superscript * represents conjugate.

It can be learned from the foregoing description that, if C is a circulant matrix, inverse computing of $(C^{H}C)^{-1}$ in ICI estimation may be simplified into Fourier transformation, thereby reducing computing complexity.

Optionally, the reference signal is a signal with a non-constant modulus.

The non-constant modulus indicates that the modulus (or a modulus value) of the reference signal is not constant. For example, it is assumed that an obtained sequence of the reference signal includes "$x1$, $x2$, $x3$, $x4$, $x5$". If a constant modulus design is used, moduli of "$x1$, $x2$, $x3$, $x4$, $x5$" may be constant (or the same). If a non-constant modulus design is used, moduli of at least one sequence of "$x1$, $x2$, $x3$, $x4$, $x5$" are different from moduli of another sequence.

The non-constant modulus design of the reference signal enables the receive-side device to better perform non-linear estimation based on a received reference signal with a non-constant modulus.

For example, the reference signal is a PTRS. In a possible implementation, weighting processing may be performed on a sequence of PTRSs mapped to subcarriers, to implement a non-constant modulus design of the PTRSs. A manner of performing weighted processing on the sequence of the PTRSs mapped to the subcarriers may be, for example, multiplying the sequence of the PTRSs by a weight value. For example, different sequences may be multiplied by different weight values; or some sequences are multiplied by a same weight value, and some sequences are multiplied by different weight values, and this is not limited. The weight value, for example, may be a complex value.

The cyclic code mapping solution and the non-constant modulus design solution may be used in combination, or may be used separately. This is not limited. It is assumed that an obtained sequence of the PTRS includes "$x1$, $x2$, $x3$, $x4$, $x5$". In an example, the cyclic code mapping solution is used in combination with the non-constant modulus design solution. As shown in FIG. 9, a sequence of PTRSs mapped to subcarriers 3 to 7 may be: $B_1 \times x1$, $B_2 \times x2$, $B_3$

$\times$ $x3$, $B_1 \times x1$, $B_2 \times x2$. In another example, the non-constant modulus design solution may be used independently. For example, sequential mapping based on a sequence of PTRSs is used as an example, and a sequence of the PTRSs mapped to the subcarriers may be: $B_1 \times x1$, $B_2 \times x2$, $B_2 \times x3$, $B_4 \times x4$, $B_5 \times x5$, where $B_i$ ($i$ = 1, 2, 3, ...) indicates a weight value.

It may be understood that the examples in FIG. 4 to FIG. 9 in embodiments of this application are merely intended to help a person skilled in the art understand embodiments of this application, but are not intended to limit embodiments of this application to specific scenarios shown in the examples. A person skilled in the art may apparently make various equivalent modifications or changes based on the examples shown in FIG. 4 to FIG. 9, and such modifications or changes also fall within the scope of embodiments of this application.

It may be further understood that, in some of the foregoing embodiments, positions mentioned for a plurality of times represent frequency-domain positions. For example, a position of a PTRS indicates a position of the PTRS in frequency domain.

It may be further understood that, in some of the foregoing embodiments, "a PTRS mapped to an RB" and "a PTRS on one RB" are sometimes alternately used, and a person skilled in the art needs to understand meanings of the two: "a PTRS mapped to an RB" or "a PTRS on an RB" may be used to indicate that a frequency-domain resource of the PTRS is a frequency-domain resource on the RB, or may be used to indicate that the PTRS is transmitted by using a frequency-domain resource on the RB, or may be used to indicate that the PTRS is distributed on the RB.

It may be further understood that, in some of the foregoing embodiments, description is provided mainly by using an example in which the reference signal is a PTRS. This is not limited herein. Other reference signals are also applicable to embodiments of this application.

It may be further understood that, in some of the foregoing embodiments, description is provided mainly by using an example in which the specific positions of the PTRSs on one RB may be one or more consecutive subcarriers starting from a subcarrier with a largest ID (or a subcarrier with a smallest ID). This is not limited herein. For example, the specific positions of the PTRSs on one RB may be alternatively one or more consecutive subcarriers starting from a subcarrier with a specific ID. The subcarrier with the specific ID may be pre-determined, or may be configured on the network side, or may be pre-configured in the transmit-side device and in the receive-side device; and this is not limited.

It may be further understood that, in some of the foregoing embodiments, description is provided mainly by using an example in which the specific positions of the PTRSs on the plurality of RBs may be distributed (for example, distributed starting at a specific spacing) starting from an RB with a largest ID (or an RB with a smallest ID). This is not limited herein. For example, the distribution of the positions of the PTRSs on the plurality of RBs may be a distribution starting from an RB with a specific ID. The RB with the specific ID may be pre-determined, or may be configured on the network side, or may be pre-configured in the transmit-side device and in the receive-side device; and this is not limited.

It may be further understood that, the formulas mentioned in embodiments of this application are examples for description, and do not pose any limitation on the protection scope of embodiments of this application. In a process of computing the foregoing related parameters, computing may be performed based on the foregoing formulas, or computing may be performed based on variations of the foregoing formulas, or computing may be performed based on a formula that is determined by using the methods provided in embodiments of this application, or computing may be performed in another manner to meet a result of computing with the formulas.

It may be further understood that, some optional features in embodiments of this application may not depend on another feature in some scenarios, or may be combined with another feature in some scenarios. This is not limited.

It may be further understood that the solutions in embodiments of this application may be properly combined for use. For example, the solutions in Aspect 1 may be combined for use. For another example, content in Aspect 1 and content in Aspect 2 may be combined for use. In addition, explanations or descriptions of terms appearing in the embodiments may be mutually referenced or explained in the embodiments. This is not limited herein.

It may be further understood that, in the foregoing method embodiments, the methods and operations implemented by the communications device (for example, the transmit-side device or the receive-side device) may be alternatively implemented by a component (for example, a chip or a circuit) of the communications device. This is not limited.

Corresponding to the methods provided in the foregoing method embodiments, embodiments of this application further provide corresponding apparatuses. The apparatuses include corresponding modules configured to perform the foregoing method embodiments. The modules may be software, hardware, or a combination of software and hardware. It may be understood that the technical features described in the method embodiments are also applicable to the following apparatus embodiments.

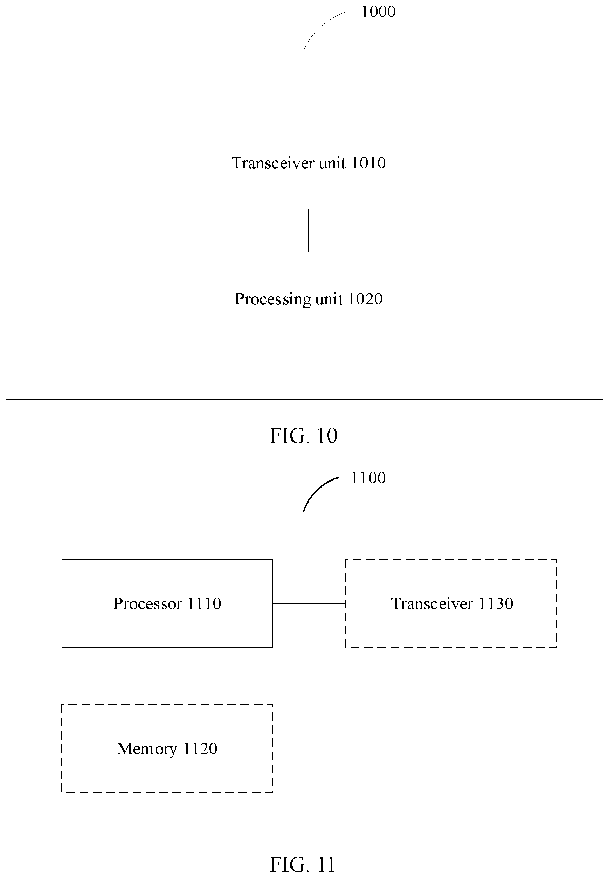

FIG. 10 is a schematic block diagram of a symbol transmission apparatus 1000 according to an embodiment of this application. The apparatus 1000 includes a transceiver unit 1010 and a processing unit 1020. The transceiver unit 1010 may be configured to implement a corresponding communications function. The transceiver unit 1010 may also be referred to as a communications interface or a communications unit. The processing unit 1020 may be configured to perform data processing.

Optionally, the apparatus 1000 further includes a storage unit. The storage unit may be configured to store instructions and/or data. The processing unit 1020 may read the instructions and/or the data in the storage unit, so that the apparatus implements various actions of the communications device in the foregoing method embodiments, for example, actions of the transmit-side device or the receive-side device.

The apparatus 1000 may be configured to perform actions performed by the communications device in the foregoing method embodiments. In this case, the apparatus 1000 may be the communications device or a component of the communications device. The transceiver unit 1010 is configured to perform operations related to receiving and sending on the side of the communications device in the foregoing method embodiments. The processing unit 1020 is configured to perform processing-related operations on the side of the communications device in the foregoing method embodiments.

In a design, the apparatus 1000 is configured to perform actions performed by the transmit-side device in the foregoing method embodiments.

In a possible implementation, the processing unit 1020 is configured to determine frequency-domain positions of reference signals on a plurality of resource blocks RBs, where the reference signals are used for phase noise estimation, the plurality of RBs include a first RB, a quantity of the reference signals on the first RB is W, the reference signals occupy consecutive frequency-domain resources on the first RB, and W is an integer greater than 1; the processing unit 1020 is further configured to map, based on the frequency-domain positions of the reference signals on the plurality of RBs, the reference signals to one or more symbols; and the transceiver unit 1010 is configured to send, to a communications device, the one or more symbols to which the reference signals are mapped.

The apparatus 1000 may implement the steps or procedures performed by the transmit-side device in the method embodiments according to embodiments of this application. The apparatus 1000 may include units configured to perform the method performed by the transmit-side device in the embodiment shown in FIG. 4.

It should be understood that a specific process in which each unit performs a foregoing corresponding step is already described in detail in the foregoing method embodiments. For brevity, details are not described herein again.

In another design, the apparatus 1000 is configured to perform actions performed by the receive-side device in the foregoing method embodiments.

In a possible implementation, the transceiver unit 1010 is configured to receive one or more symbols; and the processing unit 1020 is configured to perform phase noise estimation based on reference signals that are mapped to the one or more symbols, where frequency-domain positions of the reference signals on a plurality of resource blocks RBs include frequency-domain positions of the reference signals on a first RB, a quantity of the reference signals on the first RB is W, the reference signals occupy consecutive frequency-domain resources on the first RB, and W is an integer greater than 1.

The apparatus 1000 may implement the steps or procedures corresponding to the receive-side device in the method embodiments according to embodiments of this application. The apparatus 1000 may include units configured to perform the method performed by the receive-side device in the embodiment shown in FIG. 4.

In some possible implementations of the apparatus 1000, a manner of mapping the reference signals to the first RB is cyclic code mapping.

In some possible implementations of the apparatus 1000, W is an odd number greater than 1.

In some possible implementations of the apparatus 1000, the frequency-domain positions of the W reference signals on the first RB are determined based on a position of a center of the W reference signals on the first RB and W.

In some possible implementations of the apparatus 1000, the frequency-domain positions of the reference signals on the plurality of RBs are determined based on a frequency-domain density of the reference signals on the plurality of RBs and/or a quantity of frequency-domain resources occupied by the reference signals on each RB.

In some possible implementations of the apparatus 1000, the frequency-domain density of the reference signals on the plurality of RBs or the quantity of frequency-domain resources occupied by the reference signals on each RB is associated with one or more of the following information: a quantity of the reference signals on the plurality of RBs, a modulation scheme, a quantity of the plurality of RBs, and a frequency band in which the plurality of RBs are located.

In some possible implementations of the apparatus 1000, the reference signals are distributed on some or all RBs in the plurality of RBs, and there is a same spacing between every two adjacent RBs in the some or all RBs.

In some possible implementations of the apparatus 1000, the plurality of RBs include a second RB and a third RB, the second RB and the third RB are RBs adjacent to a direct current DC subcarrier, and frequency-domain positions of the reference signals on the second RB and the third RB are symmetrically distributed by centering on the DC subcarrier.

In some possible implementations of the apparatus 1000, the symbol is a symbol using single-carrier modulation, or the symbol is a symbol using multi-carrier modulation.

In some possible implementations of the apparatus 1000, the reference signal is a reference signal with a non-constant modulus.

In some possible implementations of the apparatus 1000, the reference signal is a phase tracking reference signal PTRS.

It should be understood that a specific process in which each unit performs a foregoing corresponding step is already described in detail in the foregoing method embodiments. For brevity, details are not described herein again.

It should be understood that the apparatus 1000 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the transmit-side device in the foregoing embodiments, and may be configured to perform the procedures and/or steps corresponding to the transmit-side device in the foregoing method embodiments; or the apparatus 1000 may be specifically the receive-side device in the foregoing embodiments, and may be configured to perform the procedures and/or steps corresponding to the receive-side device in the foregoing method embodiments. To avoid repetition, details are not described herein again.

The apparatus 1000 in the foregoing solutions has a function of implementing the corresponding steps performed by the transmit-side device in the foregoing methods, or the apparatus 1000 in the foregoing solutions has a function of implementing the corresponding steps performed by the receive-side device in the foregoing methods. The function may be implemented by hardware, or may be implemented by hardware executing corresponding software. The hardware or software includes one or more modules corresponding to the function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1010 may be alternatively a transceiver circuit (for example, the transceiver circuit may include a receiving circuit and a transmitting circuit), and the processing unit may be a processing circuit.

It needs to be noted that the apparatus in FIG. 10 may be a device in the foregoing embodiments, or may be a chip or a chip system, for example, a system-on-a-chip (system-on-a-chip, SoC). The transceiver unit may be an input/output circuit or a communications interface. The processing unit is a processor, a microprocessor, or an integrated circuit integrated on the chip. This is not limited herein.

Refer to FIG. 11. An embodiment of this application provides another symbol transmission apparatus 1100. The apparatus 1100 includes a processor 1110. The processor 1110 is coupled to a memory 1120. The memory 1120 is configured to store a computer program or instructions and/or data. The processor 1110 is configured to execute the computer program or the instructions stored in the memory 1120, or read data stored in the memory 1120, to perform the methods in the foregoing method embodiments.

Optionally, there are one or more processors 1110.

Optionally, there are one or more memories 1120.

Optionally, the memory 1120 and the processor 1110 may be integrated together, or disposed separately.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send the signals.

In a solution, the apparatus 1100 is configured to implement the operations performed by the communications device in the foregoing method embodiments.

For example, the processor 1110 is configured to execute the computer program or the instructions stored in the memory 1120, to implement related operations performed by the transmit-side device in the foregoing method embodiments, for example, the method performed by the transmit-side device in the embodiment shown in FIG. 4.

For another example, the processor 1110 is configured to execute the computer program or the instructions stored in the memory 1120, to implement related operations performed by the receive-side device in the foregoing method embodiments, for example, the method performed by the receive-side device in the embodiment shown in FIG. 4.

It should be understood that the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. In an example but not for limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct Rambus random access memory (direct rambus RAM, DR RAM).

It needs to be noted that when the processor is a general-purpose processor, a DSP, an ASIC, an FPGA or another programmable logic device, a discrete gate or transistor logic device, or a discrete hardware component, the memory (storage module) may be integrated into the processor.

It needs to further be noted that the memory described in this specification aims to include but is not limited to these memories and any memory of another proper type.

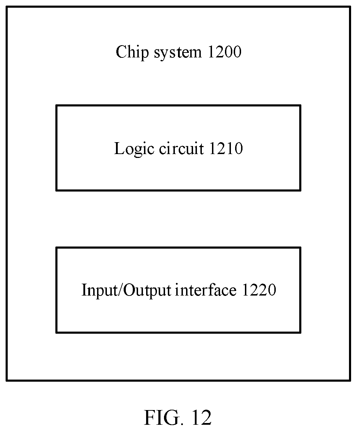

Refer to FIG. 12. An embodiment of this application provides a chip system 1200. The chip system 1200 (or may be referred to as a processing system) includes a logic circuit 1210 and an input/output interface (input/output interface) 1220.

The logic circuit 1210 may be a processing circuit in the chip system 1200. The logic circuit 1210 may be coupled to a storage unit, to invoke instructions in the storage unit, so that the chip system 1200 can implement the methods and functions in embodiments of this application. The input/output interface 1220 may be an input/output circuit in the chip system 1200, and outputs information processed by the chip system 1200, or inputs to-be-processed data or signaling information to the chip system 1200 for processing.

In a solution, the chip system 1200 is configured to implement operations performed by the communications device in the foregoing method embodiments.

For example, the logic circuit 1210 is configured to implement processing-related operations performed by the transmit-side device in the foregoing method embodiments, for example, processing-related operations performed by the transmit-side device in the embodiment shown in FIG. 4; and the input/output interface 1220 is configured to implement operations that are related to sending and/or receiving and performed by the transmit-side device in the foregoing method embodiments, for example, operations that are related to sending and/or receiving and performed by the transmit-side device in the embodiment shown in FIG. 4.

For another example, the logic circuit 1210 is configured to implement processing-related operations performed by the receive-side device in the foregoing method embodiments, for example, processing-related operations performed by the receive-side device in the embodiment shown in FIG. 4; and the input/output interface 1220 is configured to implement operations that are related to sending and/or receiving and performed by the receive-side device in the foregoing method embodiments, for example, operations that are related to sending and/or receiving and performed by the receive-side device in the embodiment shown in FIG. 4.

An embodiment of this application further provides a computer-readable storage medium. The computer-readable storage medium stores computer instructions configured to implement the methods performed by the communications device in the foregoing method embodiments.

For example, when the computer instructions are executed by a computer, the computer is enabled to implement the methods performed by the transmit-side device in the foregoing method embodiments.

For another example, when the computer instructions are executed by a computer, the computer is enabled to implement the methods performed by the receive-side device in the foregoing method embodiments.

An embodiment of this application further provides a computer program product, including instructions. When the instructions are executed by a computer, the methods performed by the communications device (for example, the transmit-side device or the receive-side device) in the foregoing method embodiments are implemented.

An embodiment of this application further provides a communications system. The communications system includes the transmit-side device and the receive-side device in the foregoing embodiments. For example, the system includes the transmit-side device and the receive-side device in the embodiment shown in FIG. 4.

For an explanation of related content about any one of the foregoing provided apparatuses and beneficial effects thereof, refer to a corresponding method embodiment. Details are not described herein again.

In the embodiments provided in this application, it should be understood that the disclosed apparatuses and methods may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

All or some of the foregoing embodiments may be implemented by software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A symbol transmission method, comprising:

   determining frequency-domain positions of reference signals on a plurality of resource blocks RBs, wherein the reference signals are used for phase noise estimation, the plurality of RBs comprise a first RB, a quantity of the reference signals on the first RB is W, the reference signals occupy consecutive frequency-domain resources on the first RB, and W is an integer greater than 1; and
   mapping, based on the frequency-domain positions of the reference signals on the plurality of RBs, the reference signals to one or more symbols, and sending, to a communications device, the one or more symbols to which the reference signals are mapped.

2.   The method according to claim 1, wherein a manner of mapping the reference signals to the first RB is cyclic code mapping.

3.   The method according to claim 1 or 2, wherein W is an odd number greater than 1.

4.   The method according to any one of claims 1 to 3, wherein
   frequency-domain positions of the W reference signals on the first RB are determined based on a position of a center of the W reference signals on the first RB and W.

5.   The method according to any one of claims 1 to 4, wherein
   the frequency-domain positions of the reference signals on the plurality of RBs are determined based on a frequency-domain density of the reference signals on the plurality of RBs and/or a quantity of frequency-domain resources occupied by the reference signals on each RB.

6.   The method according to claim 5, wherein the frequency-domain density of the reference signals on the plurality of RBs or the quantity of frequency-domain resources occupied by the reference signals on each RB is associated with one or more of the following information:
   a quantity of the reference signals on the plurality of RBs, a modulation scheme, a quantity of the plurality of RBs, and a frequency band in which the plurality of RBs are located.

7.   The method according to any one of claims 1 to 6, wherein
   the reference signals are distributed on some or all RBs in the plurality of RBs, and there is a same spacing between every two adjacent RBs in the some or all RBs.

8.   The method according to any one of claims 1 to 7, wherein

the plurality of RBs comprise a second RB and a third RB, and the second RB and the third RB are RBs adjacent to a direct current DC subcarrier; and

frequency-domain positions of the reference signals on the second RB and the third RB are symmetrically distributed by centering on the DC subcarrier.

9. The method according to any one of claims 1 to 8, wherein the symbol is a symbol using single-carrier modulation, or the symbol is a symbol using multi-carrier modulation.

10. The method according to any one of claims 1 to 9, wherein the reference signal is a signal with a non-constant modulus.

11. The method according to any one of claims 1 to 10, wherein the reference signal is a phase tracking reference signal PTRS.

12. A symbol transmission method, comprising:

receiving one or more symbols; and

performing phase noise estimation based on reference signals that are mapped to the one or more symbols, wherein frequency-domain positions of the reference signals on a plurality of resource blocks RBs comprise frequency-domain positions of the reference signals on a first RB, a quantity of the reference signals on the first RB is W, the reference signals occupy consecutive frequency-domain resources on the first RB, and W is an integer greater than 1.

13. The method according to claim 12, wherein a manner of mapping the reference signals to the first RB is cyclic code mapping.

14. The method according to claim 12 or 13, wherein W is an odd number greater than 1.

15. The method according to any one of claims 12 to 14, wherein
the frequency-domain positions of the W reference signals on the first RB are determined based on a position of a center of the W reference signals on the first RB and W.

16. The method according to any one of claims 12 to 15, wherein
the frequency-domain positions of the reference signals on the plurality of RBs are determined based on a frequency-domain density of the reference signals on the plurality of RBs and/or a quantity of frequency-domain resources occupied by the reference signals on each RB.

17. The method according to claim 16, wherein the frequency-domain density of the reference signals on the plurality of RBs or the quantity of frequency-domain resources occupied by the reference signals on each RB is associated with one or more of the following information:
a quantity of the reference signals on the plurality of RBs, a modulation scheme, a quantity of the plurality of RBs, and a frequency band in which the plurality of RBs are located.

18. The method according to any one of claims 12 to 17, wherein
the reference signals are distributed on some or all RBs in the plurality of RBs, and there is a same spacing between every two adjacent RBs in the some or all RBs.

19. The method according to any one of claims 12 to 18, wherein

the plurality of RBs comprise a second RB and a third RB, and the second RB and the third RB are RBs adjacent to a direct current DC subcarrier; and

frequency-domain positions of the reference signals on the second RB and the third RB are symmetrically distributed by centering on the DC subcarrier.

20. The method according to any one of claims 12 to 19, wherein the symbol is a symbol using single-carrier modulation, or the symbol is a symbol using multi-carrier modulation.

21. The method according to any one of claims 12 to 20, wherein the reference signal is a signal with a non-constant modulus.

22. The method according to any one of claims 12 to 21, wherein the reference signal is a phase tracking reference signal PTRS.

23. A communications apparatus, comprising a processing unit and a transceiver unit, wherein

   the processing unit is configured to determine frequency-domain positions of reference signals on a plurality of resource blocks RBs, wherein the reference signals are used for phase noise estimation, the plurality of RBs comprise a first RB, a quantity of the reference signals on the first RB is W, the reference signals occupy consecutive frequency-domain resources on the first RB, and W is an integer greater than 1;
   the processing unit is further configured to map, based on the frequency-domain positions of the reference signals on the plurality of RBs, the reference signals to one or more symbols; and
   the transceiver unit is configured to send, to a communications device, the one or more symbols to which the reference signals are mapped.

24. The apparatus according to claim 23, wherein a manner of mapping the reference signals to the first RB is cyclic code mapping.

25. The apparatus according to claim 23 or 24, wherein W is an odd number greater than 1.

26. The apparatus according to any one of claims 23 to 25, wherein
   frequency-domain positions of the W reference signals on the first RB are determined based on a position of a center of the W reference signals on the first RB and W.

27. The apparatus according to any one of claims 23 to 26, wherein
   the frequency-domain positions of the reference signals on the plurality of RBs are determined based on a frequency-domain density of the reference signals on the plurality of RBs and/or a quantity of frequency-domain resources occupied by the reference signals on each RB.

28. The apparatus according to claim 27, wherein the frequency-domain density of the reference signals on the plurality of RBs or the quantity of frequency-domain resources occupied by the reference signals on each RB is associated with one or more of the following information:
   a quantity of the reference signals on the plurality of RBs, a modulation scheme, a quantity of the plurality of RBs, and a frequency band in which the plurality of RBs are located.

29. The apparatus according to any one of claims 23 to 28, wherein
   the reference signals are distributed on some or all RBs in the plurality of RBs, and there is a same spacing between every two adjacent RBs in the some or all RBs.

30. The apparatus according to any one of claims 23 to 29, wherein

   the plurality of RBs comprise a second RB and a third RB, and the second RB and the third RB are RBs adjacent to a direct current DC subcarrier; and
   frequency-domain positions of the reference signals on the second RB and the third RB are symmetrically distributed by centering on the DC subcarrier.

31. The apparatus according to any one of claims 23 to 30, wherein the symbol is a symbol using single-carrier modulation, or the symbol is a symbol using multi-carrier modulation.

32. The apparatus according to any one of claims 23 to 31, wherein the reference signal is a signal with a non-constant modulus.

33. The apparatus according to any one of claims 23 to 32, wherein the reference signal is a phase tracking reference signal PTRS.

34. The apparatus according to any one of claims 23 to 33, wherein
   the transceiver unit is a transceiver, and/or the processing unit is a processor.

35. A communications apparatus, comprising a processing unit and a transceiver unit, wherein

the transceiver unit is configured to receive one or more symbols; and

the processing unit is configured to perform phase noise estimation based on reference signals that are mapped to the one or more symbols, wherein frequency-domain positions of the reference signals on a plurality of resource blocks RBs comprise frequency-domain positions of the reference signals on a first RB, a quantity of the reference signals on the first RB is W, the reference signals occupy consecutive frequency-domain resources on the first RB, and W is an integer greater than 1.

36. The apparatus according to claim 35, wherein a manner of mapping the reference signals to the first RB is cyclic code mapping.

37. The apparatus according to claim 35 or 36, wherein W is an odd number greater than 1.

38. The apparatus according to any one of claims 35 to 37, wherein
the frequency-domain positions of the W reference signals on the first RB are determined based on a position of a center of the W reference signals on the first RB and W.

39. The apparatus according to any one of claims 35 to 38, wherein
the frequency-domain positions of the reference signals on the plurality of RBs are determined based on a frequency-domain density of the reference signals on the plurality of RBs and/or a quantity of frequency-domain resources occupied by the reference signals on each RB.

40. The apparatus according to claim 39, wherein the frequency-domain density of the reference signals on the plurality of RBs or the quantity of frequency-domain resources occupied by the reference signals on each RB is associated with one or more of the following information:
a quantity of the reference signals on the plurality of RBs, a modulation scheme, a quantity of the plurality of RBs, and a frequency band in which the plurality of RBs are located.

41. The apparatus according to any one of claims 35 to 40, wherein
the reference signals are distributed on some or all RBs in the plurality of RBs, and there is a same spacing between every two adjacent RBs in the some or all RBs.

42. The apparatus according to any one of claims 35 to 41, wherein

the plurality of RBs comprise a second RB and a third RB, and the second RB and the third RB are RBs adjacent to a direct current DC subcarrier; and
frequency-domain positions of the reference signals on the second RB and the third RB are symmetrically distributed by centering on the DC subcarrier.

43. The apparatus according to any one of claims 35 to 42, wherein the symbol is a symbol using single-carrier modulation, or the symbol is a symbol using multi-carrier modulation.

44. The apparatus according to any one of claims 35 to 43, wherein the reference signal is a signal with a non-constant modulus.

45. The apparatus according to any one of claims 35 to 44, wherein the reference signal is a phase tracking reference signal PTRS.

46. The apparatus according to any one of claims 35 to 45, wherein
the transceiver unit is a transceiver, and/or the processing unit is a processor.

47. A communications apparatus, comprising a processor, wherein
the processor is configured to execute a computer program or instructions stored in a memory, so that the apparatus performs the following steps:

determining frequency-domain positions of reference signals on a plurality of resource blocks RBs, wherein the reference signals are used for phase noise estimation, the plurality of RBs comprise a first RB, a quantity of the reference signals on the first RB is W, the reference signals occupy consecutive frequency-domain resources on the first RB, and W is an integer greater than 1; and

mapping, based on the frequency-domain positions of the reference signals on the plurality of RBs, the reference signals to one or more symbols, and sending, to a communications device, the one or more symbols to which the reference signals are mapped.

48. A communications apparatus, comprising a processor, wherein
the processor is configured to execute a computer program or instructions stored in a memory, so that the apparatus performs the following steps:

receiving one or more symbols; and
performing phase noise estimation based on reference signals that are mapped to the one or more symbols, wherein frequency-domain positions of the reference signals on a plurality of resource blocks RBs comprise frequency-domain positions of the reference signals on a first RB, a quantity of the reference signals on the first RB is W, the reference signals occupy consecutive frequency-domain resources on the first RB, and W is an integer greater than 1.

49. The communications apparatus according to claim 47 or 48, wherein the communications apparatus further comprises the memory.

50. A computer-readable storage medium, wherein the computer-readable storage medium stores a computer program or instructions, and when the computer program runs or the instructions are run on a computer, the computer is enabled to perform the method according to any one of claims 1 to 11, or the computer is enabled to perform the method according to any one of claims 12 to 22.

51. A computer program product, wherein the computer program product comprises a computer program or instructions used to perform the method according to any one of claims 1 to 11, or the computer program product comprises a computer program or instructions used to perform the method according to any one of claims 12 to 22.

| | |
|---|---|
| ——— | Backhaul |
| ·········· | eMBB |
| —·—·— | Multi-station transmission |
| —··—··— | D2D |

FIG. 1

Phase noise CPE estimation and compensation      Phase noise ICI estimation and compensation

```
                    ┌─────────────────────────────┐   ┌───────────────────────────────────────┐
                    │  Data Y ┌──────────────┐ Compensated Y │ ┌──────┐    ┌────────────┐    ┌──────┐
┌──────────────┐    │    ┌───▶│ Phase noise CPE│───────────┼─▶│ IFFT │───▶│Phase noise ICI│──▶│ FFT  │──▶
│ Equalization │────┼────┤    │  compensation │           │   └──────┘    │ compensation │    └──────┘
└──────────────┘    │    │    └──────────────┘           │               └────────────┘
                    │    │            │                  │   Compensated        ▲
                    │    │            ▼                  │     PTRS             │
                    │    │    ┌──────────────┐ ┌──────┐  │   ┌────────────┐   ┌──────┐
                    │    └───▶│ Phase noise  │◀│ Local│──┼──▶│ Phase noise│──▶│ IFFT │
                    │         │ CPE estimation│ │ PTRS │  │   │ICI estimation│  └──────┘
                    │         └──────────────┘ └──────┘  │   └────────────┘
                    └─────────────────────────────┘   └───────────────────────────────────────┘
```

Back-end symbol processing

FIG. 2

EP 4 329 361 A1

FIG. 3

400

| Determine frequency-domain positions of reference signals on a plurality of RBs, where the reference signals are used for phase noise estimation, the plurality of RBs include a first RB, a quantity of the reference signals on the first RB is W, the reference signals occupy consecutive frequency-domain resources on the first RB, and W is an integer greater than 1 | S401 |

| Map, based on the frequency-domain positions of the reference signals on the plurality of RBs, the reference signals to one or more symbols, and send, to a communications device, the one or more symbols to which the reference signals are mapped | S402 |

FIG. 4

FIG. 5

FIG. 6

EP 4 329 361 A1

FIG. 7

FIG. 8

PTRS

PDSCH

| | |
|---|---|
| 11 | |
| 10 | |
| 9 | |
| 8 | |
| 7 | x2 |
| 6 | x1 |
| 5 | x3 |
| 4 | x2 |
| 3 | x1 |
| 2 | |
| 1 | |
| 0 | |

$$\begin{bmatrix} x1 & x2 & x3 \\ x2 & x3 & x1 \\ x3 & x1 & x2 \end{bmatrix}$$

FIG. 9

1000

Transceiver unit 1010

Processing unit 1020

FIG. 10

1100

Processor 1110

Transceiver 1130

Memory 1120

FIG. 11

Chip system 1200

Logic circuit 1210

Input/Output interface 1220

FIG. 12

## INTERNATIONAL SEARCH REPORT

| International application No. |
|---|
| **PCT/CN2022/094658** |

**A. CLASSIFICATION OF SUBJECT MATTER**

H04W 24/08(2009.01)i; H04L 5/00(2006.01)n

According to International Patent Classification (IPC) or to both national classification and IPC

**B. FIELDS SEARCHED**

Minimum documentation searched (classification system followed by classification symbols)

H04L,H04W

Documentation searched other than minimum documentation to the extent that such documents are included in the fields searched

Electronic data base consulted during the international search (name of data base and, where practicable, search terms used)

CNPAT, WPI, EPODOC, 3GPP, GOOGLE: 相位追踪参考信号, 相位跟踪参考信号, 相邻, 连续, 多个, 子载波, PTRS, PT-RS, PT RS, successive, consecutive, adjacent, neighbor, multi+, many, subcarrier, sub-carrier, ICI

**C. DOCUMENTS CONSIDERED TO BE RELEVANT**

| Category* | Citation of document, with indication, where appropriate, of the relevant passages | Relevant to claim No. |
|---|---|---|
| X | CN 109327296 A (HUAWEI TECHNOLOGIES CO., LTD.) 12 February 2019 (2019-02-12) description, paragraphs 59-111, and figures 5-6 | 1-51 |
| X | CN 109391579 A (SAMSUNG ELECTRONICS CO., LTD.) 26 February 2019 (2019-02-26) claims 1-19, and description, paragraphs 88-157, and figures 1A-4B | 1-51 |
| A | FUTUREWEI. "R1-2102776 Considerations on PDSCH/PUSCH enhancements" *3GPP TSG RAN WG1 Meeting #104-bis-e,* 07 April 2021 (2021-04-07), entire document | 1-51 |
| A | US 2018368013 A1 (SAMSUNG ELECTRONICS CO., LTD.) 20 December 2018 (2018-12-20) entire document | 1-51 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2022** | **27 July 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/094658**

| Patent document cited in search report | | | Publication date (day/month/year) | Patent family member(s) | | | Publication date (day/month/year) |
|---|---|---|---|---|---|---|---|
| CN | 109327296 | A | 12 February 2019 | EP | 3644540 | A1 | 29 April 2020 |
| | | | | WO | 2019024664 | A1 | 07 February 2019 |
| | | | | US | 2022038236 | A1 | 03 February 2022 |
| | | | | US | 2020153585 | A1 | 14 May 2020 |
| CN | 109391579 | A | 26 February 2019 | US | 2019327043 | A1 | 24 October 2019 |
| | | | | KR | 20190015072 | A | 13 February 2019 |
| | | | | US | 2019327042 | A1 | 24 October 2019 |
| | | | | TW | 201921849 | A | 01 June 2019 |
| | | | | US | 2019044673 | A1 | 07 February 2019 |
| US | 2018368013 | A1 | 20 December 2018 | WO | 2018230900 | A1 | 20 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110681691

- CN 202110834994